# EUROPEAN PATENT SPECIFICATION

(11) **EP 3 405 273 B1**
(45) Date of publication and mention of the grant of the patent: **13.10.2021**
(21) Application number: 17741908.2
(22) Date of filing: 19.01.2017
(51) Int. Cl.: B01D 17/12, G01N 1/34, G01N 35/04, B01D 15/14, B01D 15/18, G01N 30/22, G01N 30/24, G01N 30/20, G01N 30/08, B01D 15/12, G01N 30/34, B01D 15/40, G01N 30/06

(54) **SYSTEMS AND DEVICES ADDRESSING SOLVENT EXTRACTION PROBLEMS IN CHROMATOGRAPHY**
SYSTEME UND VORRICHTUNGEN ZUR BEHEBUNG VON LÖSUNGSMITTELEXTRAKTIONSPROBLEMEN IN DER CHROMATOGRAPHIE
SYSTÈMES ET DISPOSITIFS TRAITANT LES PROBLÈMES D'EXTRACTION DE SOLVANT DANS LA CHROMATOGRAPHIE

(30) Priority: 20.01.2016 US 201662280849 P
(43) Date of publication of application: 28.11.2018
(73) Proprietor: Waters Technologies Corporation, Milford, MA 01757 (US)
(72) Inventor: TARAFDER, Abhijit, Milford, MA 01757 (US); IRANETA, Pamela, C., Brighton, MA 02135 (US)
(74) Representative: Forresters IP LLP
(86) International application number: PCT/US2017/014095
(87) International publication number: WO 2017/127519

(56) References cited:
- US-A- 4 070 204
- US-A- 5 198 115
- US-A- 5 542 965
- US-A- 5 660 727
- US-A1- 2004 038 384
- US-A1- 2007 264 175

## Description

### RELATED APPLICATION

This application claims priority to United States Provisional Patent Application Serial No. 62/280849, filed January 20, 2016, and entitled "Systems, Methods and Devices Addressing Sample Extraction and Injection Problems in Chromatography," which is owned by the assignee of the instant application.

### FIELD OF THE INVENTION

The present invention generally relates to extraction systems for providing sustained delivery of feed solution, and in particular, systems, methods and devices for increasing and maintaining output and concentration from extraction systems, and decreasing extraction system down-time, for highly-compressible fluid *(e.g.*, CO₂-based fluids) and pressurized solvent extractions for chromatography systems.

### BACKGROUND

Highly-compressible fluid, or super critical fluid, extraction uses an extraction solvent that includes a fluid *(e.g.,* carbon dioxide, Freon, etc.) that is in a gaseous state at ambient/room temperature and pressure. Typically, highly-compressible fluid extraction involves a fluid that experiences significant density changes over small changes in pressure and temperature near standard operating conditions. Although highly-compressible fluid extraction may be carried out with several different compounds, in the current document CO₂ will be used as the reference compound as it is the most commonly employed. For use in the extraction, the solvent is maintained at conditions (chemical composition, temperature, pressure, etc.) such that the high-compressible fluid component and the co-solvent components, if any, are a single fluid phase.

In addition to carbon dioxide, an organic co-solvent may be added to a solvent mixture. The co-solvent may also be referred to as a modifier; the terms are used interchangeably herein. A common co-solvent is methanol. Examples of other co-solvents include acetonitrile, methylene chloride, tetrahydrofuran, methyl t-butyl ether, and other alcohols such as ethanol and isopropanol. The CO₂ and co-solvent (if any) mixture is maintained at a pressure and temperature where the mixture remains as a homogeneous, single phase. Additionally, the extractive properties of the mixture may vary significantly with temperature and pressure. For at least these reasons, systems must be able to provide and maintain tight control over temperature, pressure, etc.

Certain samples may exhibit higher solubility in highly-compressible fluids, or in a mixture of a highly-compressible fluid and co-solvents, than in traditional liquid solvents. This increased solubility is applied to extractions in a range of settings, from the research laboratory to industrial coffee decaffeination. In either setting, the highly-compressible fluid can improve the ability of the system to dissolve the sample.

Pressurized solvent extraction (PSE) is a type of extraction process that combines some of the features of highly-compressible fluid chromatography with organic solvents. A common PSE organic solvent is hexane. Examples of other solvents include: other alkanes, methylene chloride, isopropanol, acetonitrile, and short-chain alcohols such as ethanol. These solvents are liquids at ambient/room temperature and pressure. PSE system operate at high pressures, typically greater than about 86.2 bar (1250 psi) *(e.g.,* 103 bar (1500 psi), 138 bar (2000 psi), or 207 bar (3000 psi)), and may operate near room temperature or at elevated temperatures *(e.g.,* 50°C, 100°C, or 200°C). PSE solvents may also include a co-solvent such as methanol, dichloromethane, or acetone. The use of high pressures and, optionally, high temperatures, increases diffusivity, solubility, and solvent penetration, which increases the ability of the solvent to extract sample and to dissolve or suspend a higher concentration of sample. As a result, PSE systems may extract more sample, in a shorter frame of time, than extraction at ambient/room temperature using the same volume of organic solvent. Reducing the amount of solvent required for a given extraction is a cost-effective and environmentally-friendly result. PSE is also known as pressurized fluid extraction (PFE), or pressurized liquid extraction (PLE).

Highly-compressible fluids are also used in the mobile phase of chromatography systems. Highly-compressible fluid chromatography has also been referred to as CO₂-based chromatography, where CO₂ is used in the mobile phase, or supercritical fluid chromatography (SFC). (In this application, mobile phase is used as a term to describe the combined flow stream flowing through a chromatography column. For example, in a separation in which CO₂ and methanol (a co-solvent) are mixed together to create a combined flow stream passing through a chromatography column, the term mobile phase will refer to both the CO₂ and the methanol co-solvent. In a separation where there is no co-solvent, the CO₂ alone would be referred to as the mobile phase.) Similarly, highly-compressible fluid extraction has been referred to as supercritical fluid extraction (SFE).

US5198115 discloses an integrated instrument for supercritical fluid sample extraction, sample separation and concentration. US2004038384 discloses an installation and process for automatic preparation of samples. US4070284 discloses a chromatography system with a plurality of concentration columns.

### SUMMARY

The present invention provides sample extraction systems according to claims 1 and 9. Preferred embodiments are described in the dependent claims.

The present technology relates to systems, devices, and methods that incorporate highly-compressible fluid extraction or PSE systems with chromatography systems. The solvents used in PSE are generally appropriate in the mobile phase of liquid chromatography (LC) or high performance liquid chromatography (HPLC) systems, or as a co-solvent in highly-compressible fluid chromatography systems. Thus, for both CO₂-based extraction and PSE systems, it is possible to use the same solution as both extraction solvent and mobile phase. By doing so, the feed solution from the extraction system will be compatible with the chromatography system and support efficient sample loading.

The present technology relates to devices and methods for supplying a continuous feed solution having at least a threshold concentration of sample to a chromatography system from a sample extraction system. This may be achieved by placing or replacing one or more extraction vessels into the extraction system, and pretreating such extraction vessel(s) with an extraction solvent, while simultaneously drawing feed solution from one or more distinct extraction vessels within the extraction system. The extraction vessels within the extraction system are downstream of a pressurized extraction solvent source which provides a pressurized flowpath of a pressurized organic solvent or a highly-compressible fluid solvent (either of which may additionally include co-solvents) to a chromatography system. Systems and methods of the present technology may include arrangements of extraction vessels where the extraction vessels are arranged in parallel with each other, such that each extraction vessel in the system may have its own flowpath, or in series with each other, such that a flowpath passes sequentially through more than one extraction vessel.

The present technology relates to a sample extraction system capable of providing sustained delivery of feed solution and including an extraction solvent source (wherein the extraction solvent includes a fluid selected from a group consisting of (i) an organic solvent maintained at or above 86.2 bar (1250 psi) and (ii) CO₂), a splitter in fluid communication with the extraction solvent source, a first extraction vessel assembly and a second extraction vessel assembly, each extraction vessel assembly including a first valve, an inlet port, an outlet port, and a second valve, the first valve being connected to the splitter, the inlet port being connected to the first valve and configured to selectively connect to an inlet of an extraction vessel, and the outlet port configured to selectively connect to an outlet of the extraction vessel and being connected to the second valve; a coupler, in fluid communication with the second valve of each of the first extraction vessel assembly and the second valve of the second extraction assembly; and a feed injector in fluid communication with the coupler, the feed injector capable of providing a feed of extraction solvent supplied with sample for use in the system.

As used herein, the extraction solvent includes a fluid selected from a group consisting of (i) an organic solvent maintained at or above 86.2 bar (1250 psi) and (ii) CO₂. In other words, the extraction solvent includes a fluid component, which may be the primary component, which is either an organic solvent maintained at pressure above 86.2 bar (1250 psi) or CO₂. The extraction solvent may also include other components. For example, an extraction solvent may be entirely organic solvent maintained at or above 86.2 bar (1250 psi), *(e.g.* hexane maintained at or above about 86.2 bar (1250 psi), or a mixture of hexane and tetrahydrofuran maintained above 86.2 bar (1250 psi)). Alternatively, the extraction solvent may include organic solvent maintained at or above 86.2 bar (1250 psi) and one or more other components (*e.g.*, methanol and water maintained at or above 86.2 bar (1250 psi)). Alternatively, the extraction solvent may include CO₂ as the fluid, which may be CO₂ maintained at, about, or above the critical point. Alternatively, the extraction solvent may include CO₂ and one or more other components (*e.g.*, CO₂ and methanol).

In an embodiment, the system may include three or more extraction vessel assemblies. In an embodiment, each of the first extraction vessel assembly and the second extraction vessel assembly may be additionally provided with a connection to a detector, the point of connection within each extraction vessel assembly being downstream of the outlet port and upstream of the coupler. In an embodiment, the system may include a carousel and a switching arm, wherein the carousel has one or more extraction vessel holders, and the switching arm is capable of placing extraction vessels into, and removing extraction vessels from, any of: the first extraction vessel assembly, the second extraction vessel assembly, and one or more of the extraction vessel holders of the carousel. In an embodiment, the splitter may be capable of proportionally providing variable flowrates of extraction solvent to each of the first extraction vessel assembly and the second extraction vessel assembly. In an embodiment, the chromatography system may be provided with a sample loop to provide sample injection onto a chromatography column where the feed injector of the sample extraction system is in fluid communication with the sample loop. In an embodiment, the first extraction vessel assembly and the second extraction vessel assembly each additionally include an independently controllable heat source. In an embodiment, each of the first extraction vessel assembly and the second extraction vessel assembly may include independent pressure control.

The present technology relates to a method for providing sustained delivery of feed solution from a sample extraction system to a feed injector of a chromatography system, including in a first mode drawing sample from two extraction vessels and providing sample to the feed injector, in a second mode drawing sample from an extraction vessel while pretreating another extraction vessel and providing sample to the feed injector, and in a third mode drawing sample from an extraction vessel while isolating another extraction vessel and providing sample to the feed injector. In an embodiment, the first mode may be achieved by providing each of the first extraction vessel assembly and the second extraction vessel assembly with a distinct, removable extraction vessel, and pressuring a first flowpath from the extraction solvent source through the splitter, the first extraction vessel assembly, and the coupler to the feed injector, and a second flowpath of extraction solvent through the splitter, the second extraction vessel assembly, and the coupler to the feed injector. In an embodiment, the second mode may be achieved by either (a) providing each of the first extraction vessel assembly and the second extraction vessel assembly with a district, removable extraction vessel, and pressurizing a first flowpath from the extraction solvent source through the splitter, the first extraction vessel assembly, and the coupler, to the feed injector, and a second flowpath from the extraction solvent source through the splitter to the second extraction vessel assembly, the second valve of the second extraction vessel assembly being closed, and (b) providing each of the first extraction vessel assembly and the second extraction vessel assembly with a distinct, removable extraction vessel, and pressurizing a first flowpath from the extraction solvent source through the splitter, the second extraction vessel assembly, and the coupler to the feed injector, and a second flowpath from the extraction solvent source through the splitter to the first valve assembly, the second valve of the first extraction vessel assembly being closed. In an embodiment, the third mode may be achieved by either of (a) providing at least the second extraction vessel assembly with a distinct, removable extraction vessel, and pressurizing a first flowpath from the extraction solvent source through the splitter, the second extraction vessel assembly, and the coupler to the feed injector, the first valve and the second valve of the first extraction vessel assembly being closed, and (b) providing at least the first extraction vessel assembly with a distinct, removable extraction vessel, and pressurizing a first flowpath from the extraction solvent source through the splitter, the first extraction vessel assembly, and the coupler to the feed injector, the first valve and the second valve of the second extraction vessel assembly being closed.

The present technology relates to a method of operating a sample extraction system with a detector to provide feed solution with at least a threshold concentration of sample over an extended period, the method including: feeding extraction solvent to a first extraction vessel within the first extraction vessel assembly and drawing a supply of feed solution therefrom, while preparing a second extraction vessel by placing the second extraction vessel in the second extraction vessel assembly and pressurizing the second extraction vessel with extraction solvent to begin the extraction; measuring concentration of sample in the portion of extraction solvent proximate each of the first extraction vessel and the second extraction vessel using a detector; after detecting via the detector that concentration of sample supplied by the first exaction vessel is at or below a threshold concentration, and that concentration of sample in the solvent proximate the second extraction vessel is at or above the threshold connection, switching the supply of feed solution from the first extraction vessel to the second extraction vessel; and drawing a supply of feed solution at or above the threshold concentration from the second extraction vessel, while isolating the first extraction vessel (wherein the extraction solvent includes a fluid selected from a group consisting of (i) an organic solvent maintained at or above 86.2 bar (1250 psi) and (ii) CO₂). In an embodiment, the method includes successively replacing each isolated extraction vessel with another extraction vessel and applying the foregoing steps to each subsequent extraction vessel.

The present technology relates to a method of operating a sample extraction system to provide feed solution for stacked, discrete sample injections to a chromatography column of a chromatography system having at least a threshold concentration of sample over an extended period, the method including simultaneous and independent operation of a sample injection protocol and a sample preparation protocol. The sample injection protocol may include a first step of loading a sample loop by providing feed solution from a feed injection within the sample extraction system to the sample loop, a second step of introducing the contents of the sample loop to the column of the chromatography system, and repeating the first through second steps to provide stacked, discrete sample injection. The feed solution preparation protocol may include treating one or more untreated extraction vessels within the sample extraction system by saturating the one or more distinct extraction vessels with an extraction solvent (wherein the extraction solvent includes a fluid selected from a group consisting of (i) an organic solvent maintained at or above 86.2 bar (1250 psi) and (ii) CO₂), and drawing a continuous supply of feed solution from one or more treated extraction vessels within the sample extraction system. In an embodiment, the continuous supply of feed solution may be obtained by drawing a supply of feed solution from a first extraction vessel within the first extraction vessel assembly, while preparing a second extraction vessel by planning the second extraction vessel in the second extraction vessel assembly and pressurizing the second extraction vessel to begin the extraction, and using the detector to measure concentration of sample downstream of each extraction vessel assembly. After detecting via the detector that concentration of sample supplied by the first extraction vessel has fallen below a threshold concentration and that concentration of sample supplied by the second extraction vessel is at or above the threshold concentration, the supply of feed solution may be switched from the first extraction vessel to the second extraction vessel. Thereafter, a supply of feed solution may be drawn from the second extraction vessel to continue the extraction at or above the threshold concentration, while isolating the first extraction vessel and maintaining the feed solution supply for the duration of the stacked discrete sample injection by successively replacing zero, one, or more isolated extraction vessels with additional extraction vessels.

The present technology relates to a sample extraction system capable of providing sustained deliver of a feed solution having an approximately constant concentration of sample, the sample extraction system including: (a) an extraction solvent source; (b) a first multi-port valve connected to the extraction solvent source; (c) a first extraction vessel assembly and a second extraction vessel assembly, each extraction vessel assembly including an inlet port and an outlet port, the inlet port configured to selectively connect to an inlet of an extraction vessel that is to be disposed within one of the first or second extraction vessel assemblies, the outlet port configured to selectively connect to an outlet of the extraction vessel disposed therein; (d) a second multi-port valve in fluid communication with the first and second extraction vessel assemblies. The first multi-port valve and the second multi-port valve may be configured to establish multiple fluid circuits from the extraction solvent source through each extraction vessel assembly individually or through both in sequence, to the outlet port of the system. In an embodiment, the outlet port may be fluidly connected to a chromatography system. In an embodiment, the sample extraction system may have three or more extraction vessel assemblies. In an embodiment, the sample extraction system may include a carousel and a switching arm, wherein the carousel includes a plurality of extraction vessel holders, and the switching arm may be capable of placing extraction vessels into, and removing extraction vessels from, any of: the first extraction vessel assembly, the second extraction vessel assembly, and one or more of the extraction vessel holders of the carousel. In an embodiment, each of the first extraction vessel assembly and the second extraction vessel assembly may be additionally provided with a connection to a detector, the point of connection of the detector bring downstream of the outlet port. In an embodiment with a chromatography system, the chromatography system may be provided with a sample loop to provide sample injection onto the chromatography column and wherein the feed injector of the sample extraction system is in fluid communication with the sample loop. In an embodiment, the sample extraction system may have a first extraction vessel assembly and a second extraction vessel assembly that each additionally include an independently controllable heat source.

The present technology relates to a method of operating a sample extraction system able to hold at least two extraction vessels to provide sustained delivery of a feed solution have approximately constant concentration of sample which has at least three modes. The first mode provides at least a first extraction vessel to the sample extraction system and establishes an extraction solvent flow through the first extraction vessel. The second mode provides a first extraction vessel and a second extraction vessel in the sample extraction system and establishes an extraction solvent flow through the first extraction vessel then through the second extraction vessel. The third mode provides a first extraction vessel and a second extraction vessel in the sample extraction system and establishes an extraction solvent flow through the second extraction vessel then through the first extraction vessel.

The present technology relates to a method of operating a sample extraction system and a chromatography system to provide constant availability of feed solution with a constant concentration of sample from the sample extraction system to a sample loop of the chromatography system to provide stacked, discrete sample injections to a chromatography column. The method includes simultaneous and independent operation of a sample injection protocol and a feed solution preparation protocol. The sample injection protocol includes a first step of loading the sample loop by providing a feed solution flow from the extraction system to the sample loop, a second step of introducing the contents of the sample loop to the column of the chromatography system, and thereafter repeating the first through second steps to provide stacked, discrete sample injection. The feed solution preparation protocol includes providing at least two extraction vessels within the extraction system, and treating the at least two extraction vessels with extraction solvent, establishing an extraction solvent flowpath through each of the at least two extraction vessels sequentially (and then to the sample loop), and maintaining the feed solution supply for the duration of the stacked, discrete injections by successively replacing zero, one, or more isolated extraction vessels with additional extraction vessels. In an embodiment, the feed solution preparation protocol additionally includes determining concentration of sample downstream of each extraction vessel, establishing the extraction solvent flowpath through the extraction vessel reporting the lowest concentration, and then through each sample extraction vessel reporting a higher concentration in ascending order by reported concentration and to the feed injector, monitoring concentration of sample downstream of at least the extraction vessel assembly reporting the lowest concentration, and when the lowest concentration falls to the predetermined minimum level, isolating that extraction vessel while continuing to provide extraction solvent flow through the extraction vessels reporting higher concentration to the feed injector; and maintaining the feed solution supply for the duration of the stacked, discrete injections by successively replacing zero, one, or more isolated extraction vessels with additional extraction vessels.

The present technology relates to a sample extraction system capable of providing sustained delivery of a feed solution having an approximately constant concentration of sample, the sample extraction system including, (a) an extraction solvent source; (b) a first multi-port valve and a second multiport valve, each multiport valve connected to the extraction solvent source and to an outlet of the system; (c) a first extraction vessel assembly and a second extraction vessel assembly, each extraction vessel assembly comprising an inlet port and an outlet port, the inlet port connected to one of the multi-port valves and configured to selectively connect to an inlet of an extraction vessel, and the outlet port connected to the other of the multiport valves and configured to selectively connect to an outlet of the extraction vessel; and wherein the first multi-port valve and the second multi-port valve are configured to establish multiple fluid circuits from the extraction solvent source through each extraction vessel assembly individually or through both extraction vessel assemblies in sequence, to the outlet port of the system.

The present technology provides devices and methods that address the solvent compatibility and extraction quality problems of liquid sample feeds and the user intervention and low sample feed volume problems of extraction vessels. The present technology provides systems and methods for achieving a sustained delivery of feed solution that has at least a threshold concentration of sample and can be delivered directly to a chromatographic system for use in the separation. Additionally, the present technology provides systems and methods to manage the placement and replacement of extraction vessels in systems which may provide a desired concentration.

### BRIEF DESCRIPTION OF THE DRAWINGS

The invention will be more fully understood from the following detailed description taken in conjunction with the accompanying drawings, in which:
FIG. 1 shows a theoretical plot of sample concentration against time for a sample extraction, with arrows indicating replacement of extraction vessels;
FIG. 2 schematically illustrates an extraction and injection system;
FIG. 3A shows a theoretical plot of sample concentration against time for a sample extraction according to an embodiment of the present technology, with arrows indicating replacement of extraction vessels;
FIG. 3B shows a theoretical plot of sample concentration against time for a sample extraction according to an embodiment of the present technology, with arrows indicating replacement of extraction vessels;
FIG. 4 schematically illustrates a sample extraction system according to an embodiment of the present technology;
FIG. 5 schematically illustrates a method of operating a sample extraction system according to an embodiment of the present technology;
FIG. 6A schematically illustrates a sample extraction system according to an embodiment of the present technology having a detector;
FIG. 6B schematically illustrates a sample extraction system according to an embodiment of the present technology having three extraction vessels;
FIG. 6C schematically illustrates a sample extraction system according to an embodiment of the present technology having four extraction vessels;
FIG. 7 schematically illustrates a method of operating a sample extraction system according to an embodiment of the present technology having parallel extraction vessels;
FIG. 8 schematically illustrates a sample extraction system according to an embodiment of the present technology;
FIG. 9 schematically illustrates a sample extraction system according to an embodiment of the present technology;
FIG. 10 schematically illustrates a sample extraction system according to an embodiment of the present technology having a detector;
FIG. 11 schematically illustrates a sample extraction system according to an embodiment of the present technology having a detector;
FIG. 12 schematically illustrates a method of operating a sample extraction system according to an embodiment of the present technology;
FIG. 13 schematically illustrates a sample extraction system according to an embodiment of the present technology having three extraction vessels;
FIG. 14 schematically illustrates a sample extraction system of the present technology within a chromatography system; and
FIG. 15 schematically illustrates a method of operating a sample extraction system according to an embodiment of the present technology having extraction vessels in series.

### DETAILED DESCRIPTION

Certain exemplary embodiments will now be described to provide an overall understanding of the principles of the structure, function, manufacture, and use of the devices and methods disclosed herein. One or more examples of these embodiments are illustrated in the accompanying drawings. Those skilled in the art will understand that the devices and methods specifically described herein and illustrated in the accompanying drawings are nonlimiting exemplary embodiments and that the scope of the present invention is defined solely by the claims. The features illustrated or described in connection with one exemplary embodiment may be combined with the features of other embodiments.

The present technology may be utilized in a number of embodiments in what may be broadly characterized as either parallel- or series-type extraction operation. Parallel-type operation is that in which two or more extraction vessels are parallel to each other, such that each may draw a fluid source and the deliver a sample-supplied fluid flow to the system independently. Series-type extraction is that in which two or more extraction vessels may be operated in sequence; that is that a flow may be created to a first extraction vessel to a second extraction vessel and then to the system. A given system according to the present technology may be designed for either one of parallel extraction or series extraction, or a system may operate in either parallel- or series-type operation. Additionally, both parallel- and series-type systems may operate with only a single extraction vessel, but have the capability to operate with two or more extraction vessels, in accord with either of the two methods of operation. The two modes of operation may be further understood by reference to the examples provided below.

Sustained delivery of a feed solution refers to delivery of the feed solution from an extraction system above or about a threshold concentration that continues for a longer period of time, or that delivers a larger total volume, or both, than could be delivered by a single extraction vessel of the same size and type being used in the extraction system.

The threshold concentration is a concentration set by the user for the feed solution. The determination of whether the threshold concentration is met may be by direct measurement of concentration or may be based upon a metric that is related to concentration or is a proxy for concentration. For example, an absorbance reading where a UV-Vis detector is being used to analyze the sample solution. The concentration may be set directly *(i.e.,* by specifying a concentration value) or indirectly *(e.g.,* by specifying a percentage of the saturation concentration).

Loading of sample onto the column may be achieved, *e.g.*, by direct loading from the extraction vessel, by use of a sample loop, or through an at-column dilution mechanism (as described in U.S. Patent 6,790,361 entitled "Mobile Phase Dilution Scheme for Enhanced Chromatography.").

Feed solution means a portion of sample solution which has sufficient sample concentration (as designated by the user) to be supplied to the chromatography system for the separation. Sample solution means a portion of extraction solvent supplied with some portion of dissolved or suspended sample. That is, a sample solution may not have the concentration required of the feed solution. For example, in an embodiment using two consecutive extraction vessels to achieve the desired concentration in the feed solution, a portion of extraction solvent may be introduced to the first extraction vessel where it may dissolve some portion of sample. That portion of extraction solvent with sample constitutes a sample solution, which may then be introduced to the second extraction vessel. After dissolving or suspending additional sample in the second extraction vessel, that portion of extraction solvent with sample constituting a sample solution may reach sufficient sample concentration to constitute a feed solution. Additionally, references to the solvent proximate the extraction vessel include any of the extraction solvent, sample solution, or feed solution in the proximity of the sample, that is located where the solvent may continue to dissolve or suspend additional sample and exchange sample with the sample loaded in the extraction vessel. That is, the distinction between extraction solvent, sample solution, and feed solution as used herein is based upon the concentration of sample present, if any.

As used herein, extraction solvent includes either a fluid including one or more organic solvents maintained at or above 86.2 bar (1250 psi) or a highly-compressible fluid, *e.g.*, CO₂. The extraction solvent may additionally include a co-solvent (sometimes referred to as a modifier), such as methanol, ethanol, isopropanol, and other alcohols, acetonitrile, dichloromethane, etc. The organic solvents include hexane, other alkanes, methylene chloride, acetonitrile, tetrahydrofuran, and alcohols such as ethanol and isopropanol.

Splitter refers to a component that may receive fluid flow from a fluid path upstream of the splitter and provide fluid flow to two or more fluid paths downstream of the splitter. In certain embodiments, the splitter may provide flow controllably to each fluid path in a particular quantity or proportion. Coupler refers to a component that may receive fluid flow from two or more fluid paths upstream of the coupler and may provide fluid flow to a single fluid path downstream of the coupler, or in the event that more than two fluid paths are upstream of the coupler the coupler may provide fluid flow to a number of downstream fluid paths less than the number of upstream fluid paths, *e.g.* a coupler receiving fluid flow from x fluid paths, where x is greater than 2, the coupler may provide fluid flow to x - 1 or fewer fluid paths.

The multi-port valves can be a multi-port rotary shear seal valve having a plurality of fluidic ports and one or more flow-through conduits. Although described primarily as a rotary valve, other types of suitable valves can also be used including but not limited to, slider valves, solenoids, and pin valves. Each flow-through conduit provides a pathway between a pair of neighboring fluidic ports. When the valve rotates, its flow-through conduits move clockwise or counterclockwise depending upon the valve's direction of rotation. This movement operates to switch the flow-through conduit to a different pairing of neighboring fluidic ports, establishing a fluidic pathway between that different pair while removing the pathway from the previously connected pair of fluidic ports.

Extraction vessel means a vessel designed to hold a solid sample *(e.g.* a loose solid sample, or a sample contained in a solid matrix). The extraction vessel may be constructed from one or more of: stainless steel, titanium, zirconium, corrosion resistant metal alloys and ceramics. The extraction vessel may be provided with one or more filters, so that solid components of the sample may be excluded from the system. The extraction vessel may have outlet and inlet ports suitable for receiving extraction solvent and delivering feed solution. The extraction vessel may be designed to be opened and the sample replaced or augmented by the user, or the extraction vessel may be a single-use device. On-line and offline as used herein refer to whether or not an extraction vessel is then providing sample solution.

In embodiments, each extraction vessel may be provided with an independent temperature control mechanism. For example, each extraction vessel may be provided with a resistive heat source. Adjusting temperature in the extraction vessels independently may offer a number of advantages. For example, in embodiments with two or more extraction vessels in series, the pressure within each successive extraction vessel may tend to be successively reduced, which may reduce the output of the second or later extraction vessels relative to the first. This effect may be offset by increasing the temperature in each successive extraction vessel to maintain a desired level of output from each of the successive extraction vessels. Similarly, as sample supply within a given extraction vessel depletes and output is reduced, the temperature of that extraction vessel may be increased to restore or partially restore the output.

In embodiments, extraction vessels may be supplied with independent pressure controls such that the solvent pressure within each extraction vessel may be determined independently. Adjusting pressure in the extraction vessels independently may offer a number of advantages. In embodiments with two or more extraction vessels in series and a single pressure source upstream of all of the extraction vessels, the pressure may tend to drop from the first to the second extraction vessel and to each successive extraction vessel, if any. Through independent pressure adjustment, the pressure may be maintained along the series of extraction vessels. Similarly, as sample supply within a given extraction vessel depletes and output is reduced, the pressure of that extraction vessel may be increased to restore or partially restore the output.

Various descriptions are used herein to describe extraction vessels relative to other extraction vessels. For example, a sample-rich extraction vessel contains relatively more sample than a sample-poor extraction vessel. Similarly, certain descriptions refer to a primary extraction vessel which may initially provide sample solution before a secondary extraction vessel provides sample solution. However, these relative statements do not indicate that the extraction vessels described are different types of extraction vessels. For example, an extraction vessel may initially be described as a sample-rich extraction vessel, then, after that extraction vessel provides sample in the extraction process and becomes partially depleted, it may be described as a sample-poor extraction vessel.

Pre-treating refers to a process of providing extraction solvent to an extraction vessel such that the extraction process occurs or is initiated, but without providing sample solution from the extraction vessel to the system. Preferably, a pre-treating process will permit an extraction vessel to provide relatively concentrated sample solution once that extraction vessel is brought online. The pressure and temperature of the vessel may be modified to control the sample concentration in the pretreated solvent. Length of pretreatment can also be modified to adjust sample concentration in the solvent.

For the present disclosure, no distinction is intended between samples that are dissolved by the extraction solvent and remain dissolved in the sample solution and samples that are suspended by the extraction solvent and remain suspended in the sample solution. References to dissolving sample or dissolved sample equally include suspending sample or suspended sample and vice versa.

A user may wish to change the type of sample being extracted after one or more extraction vessels with a given sample have been extracted. The user may do so by replacing an extraction vessel with a new vessel containing a different sample. The system may be washed by, for example, using an empty extraction vessel or section of tubing to provide a path to run extraction solvent through the system, or by running the new feed solution for some period to ensure that the old feed solution has been washed from the system. Alternatively, systems may be provided with a bypass line in order to provide a wash solution through the system automatically.

The detector as used herein may be selected from a group including ultraviolet/visible light (UV-Vis) detectors, refractive index (RI) detectors, conductivity monitors, flame ionization detectors (FID), atomic absorbance spectrometers (AAS), or mass spectrometers (MS).

As used herein, a carousel is a device that holds one or more extraction vessels, for example 2, 4, 6, or 10 extraction vessels. The switching arm is a device which can move and install an extraction vessel within an extraction vessel assembly. Together, the switching arm and the carousel may provide any of the extraction vessels held within the carousel to the extraction vessel assembly. For example, the carousel may be rotated to provide access to each of the one or more extraction vessels. The carousel and switching arm may enhance the ability of the extraction system to run without user intervention, including batch operation or "lights-out" operation.

Sample loop as used herein may be any chamber *(e.g.* a section of tubing) into which the feed solution may be supplied and from which it may be controllably introduced to the pressurized flow path leading to the chromatography column. Stacked, discrete injection refers to providing a series *(i.e.* two or more) injections consecutively to the chromatography column. Stacked, discrete injections may be provided by introducing the series of injections via the sample loop. The amount of time between each discrete injection may be set by the user. The user may wish to balance the advantages of a longer time between injections (*e.g.*, a higher-quality separation) with the advantages a shorter time between injections (*e.g.*, greater through-put).

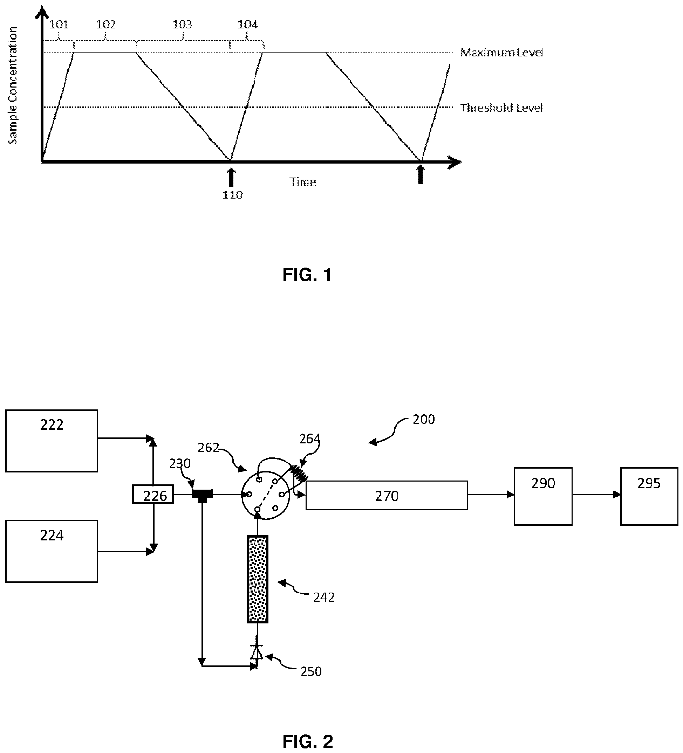

FIG. 2 illustrates a chromatography system 200 with a single extraction vessel. The system illustrated in FIG. 2 includes a single mobile phase source 222. The mobile phase source 222 provides mobile phase to a mixing connector or mixer 226. The system includes a co-solvent source 224. Co-solvent source 224 provides co-solvent to mixer 226. Mixer 226 is in fluid communication with a flow controller 230. Flow controller 230 is additionally in fluid communication with a valve 262 and an extraction vessel 242. Flow controller 230 can controllably direct flow to either or both of valve 262 and extraction vessel 242. Extraction vessel 242 is also in fluid communication with valve 262. Valve 262 is further in fluid communication with sample loop 264 and chromatography column 270. Downstream of the chromatography column 270 is an optional detector 290 and an optional back-pressure regulator 295 or some other recovery/collection/recycling mechanism.

Additionally, system 200 depicts an optional one-way valve 250 interposed between the flow controller 230 and the extraction vessel 242. The one-way valve 250 may be deployed such that the only permitted direction of flow through the one-way valve 250 is from the flow controller 230 to the extraction column 242

Mobile phase source 222 and the co-solvent source 224 may be operated simultaneously to provide a mixture comprising mobile phase and co-solvent prepared by the mixer 226 and provided to the flow controller 230. Flow controller 230 may direct flow of the mixture to valve 262, which may be positioned to provide flow of the mixture to chromatography column 270. The flow controller 230 additionally directs flow of the mixture to the extraction vessel 242, which contains the sample. As the mixture passes through the extraction vessel, it extracts sample, forming a feed solution comprising the mixture and sample. The feed solution is then conveyed by valve 262 to sample loop 264. Sample loop 264 provides for controlled injection of sample, as discussed below.

By incorporating extraction vessel 242 onto chromatography system 200, the system may achieve a concentration of sample within the feed solution that is close to the saturation point for the parameters established for the system *(i.e.,* solvents, pressure, temperature, etc.), provided that the flow rate through extraction vessel 242 allows sufficient time for the extraction to occur, and sufficient sample is available in the extraction vessel. Near saturation concentrations are possible because the sample can be allowed to dissolve into the solution in extraction vessel 242 until the solution is at or near saturation, if such a concentration is desired by the user.

Within system 200, extraction vessel 242 supplies feed solution through valve 262. Valve 262 can be a multi-port rotary shear seal valve having a plurality of fluidic ports and one or more flow-through conduits, or other types of suitable valves can also be used including but not limited to, slider valves, solenoids, and pin valves.

Valve 262 can be placed in a plurality of discrete positions. For example, those positions can include a first position corresponding to a LOAD state of the valve and a second position corresponding to an INJECT state of the valve. In the LOAD state, flow controller 230 is in fluid communication with chromatography column 270 and extraction vessel 242 is in fluid communication with sample loop 264. When in the LOAD state, the flow from flow controller 230 through one-way valve 250 and through extraction vessel 242 will deliver a feed solution, comprising mobile phase, co-solvent, and sample to the sample loop 264.

In the INJECT state of the valve, flow controller 230 can deliver a mixture of mobile phase and co-solvent through sample loop 264 to chromatography column 270, injecting the contents of the sample loop 264 onto chromatography column 270. When in the INJECT state, flow from extraction vessel 242 can be delivered to waste or to the recovery/collection/recycling mechanism 295.

The present disclosure allows for switching out, replacement, or operation of more than one extraction vessel at a time. To do so, embodiments of the present invention incorporate operation of the vessels in parallel and/or in series.

### Embodiments operating in parallel.

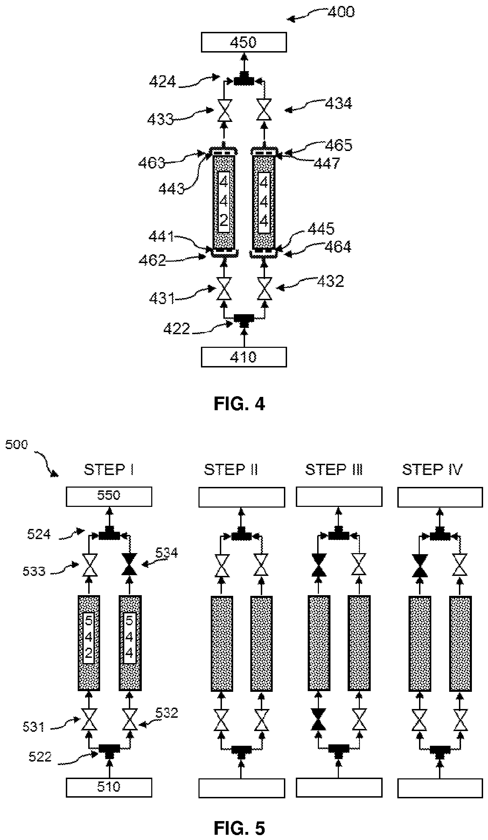

FIG. 4 shows an extraction system 400 according to an embodiment of the present technology using a parallel configuration of extraction vessels. Extraction system 400 has two extraction vessel assemblies, one having valve 431, inlet port 462, outlet port 463, and valve 433, and the other having valve 432, inlet port 464, outlet port 465, and valve 434. In extraction system 400, both extraction vessel assemblies are depicted as provided with extraction vessels, which are extraction vessel 442 and extraction vessel 444 respectively. Extraction vessel 442 has inlet 441 and outlet 443. Extraction vessel 444 has inlet 445 and outlet 447. Inlet port 462 is configured to connect to inlet 441. Outlet port 463 in configured to connect to outlet 443. Inlet port 464 is configured to connect to inlet 445. Outlet port 465 is configured to connect to outlet 447. Extraction system 400 contains extraction solvent source 410, which provides the extraction solvent, *e.g.* CO₂, CO₂ and a modifier, hexane, etc. The system contains a splitter 422 which provides extraction solvent from the extraction solvent source 410 to each of valve 431 and 432. Valve 431 controls flow entering extraction vessel 442. Valve 432 controls flow entering an extraction vessel 444. After extraction vessel 442 is valve 433, and after extraction vessel 444 is valve 434. Valve 433 and valve 434 control flow to coupler 424. Additionally, valve 433 and valve 434 may be provided with an ability to bleed the extraction vessels so that extraction solvent will be able to saturate the extraction vessel without the creation of an air-lock for example, during a pre-treatment phase. Coupler 424 combines the flow from both extraction vessel 442 and extraction vessel 444 and provides feed solution to feed injector 450. Each of valve 431, 432, 433, and 424 may be any valve that can control fluid flow.

In extraction system 400, one valve is shown associated with the inlet of each extraction vessel and another valve with the outlet. In other embodiments, other valve configurations may be used. For example, the functionality of valve 431 and valve 432 may be accomplished by a single valve, such as a rotary shear seal valve, which defines a plurality of fluid paths, and could define fluid paths wherein, for example, only one of extraction vessel 442 and extraction vessel 444 is supplied with fluid flow, or both are supplied, or neither. In other embodiments, the same type of valve could replace valve 433 and valve 434 with a single valve. Or, a valve could replace all of valve 431, valve 432, valve 433, and valve 434. Certain valves, such as rotary shear seal valves, may additionally incorporate the function of splitter 422 or coupler 424 in certain embodiments. The valves may additionally be one-way valves. Use of one-way valves may reduce contamination and loss of the sample from extraction vessels. For some applications, low volume components may be used after the extraction vessels, which may improve the quality of the separation by avoiding additional extra column volume. Once the sample band is introduced into the system, it may begin to spread, resulting in a diffuse sample front, even before introduction to the chromatographic system.

The components may be connected directly, or connections may be by tubing such as polytetrafluoroethylene (PTFE), polyetheretherketone (PEEK), or stainless steel tubing. The valves maybe be made of steel, titanium, and alloys of the same.

FIG. 5 shows a method of operation of extraction system 500-which is comparable to extraction system 400 as discussed above. In FIG. 5, a filled-in valve figure indicates a closed valve and an unfilled valve figure indicates an open valve. In Step I, which represents a possible initial phase of operation, a first flowpath is established from extraction solvent source 510 through extraction vessel 542 and to feed injector 550, and a second flowpath is established from extraction solvent source 510 to extraction vessel 544. However, valve 534 is closed in Step 1 so that flow from extraction vessel 544 is not provided to feed injector 550. Providing extraction solvent to extraction vessel 544 without allowing flow from extraction vessel 544 permits extraction vessel 544 to be pre-treated. During this time, extraction vessel 542 can provide sample to the system. In Step II, both valve 533 and valve 534 are opened so that both extraction vessel 542 and extraction vessel 544 provide feed solution to feed injector 550. The system or the user may elect to operate the system in Step II when the sample concentration in extraction vessel 542 begins to decrease and using only extraction vessel 542 fails to provide sufficient sample to feed injector 550. The solvent flow through each of extraction vessel 542 and extraction vessel 544 may be at approximately the same flowrate. Alternatively, the flowrate may be divided between the two extraction vessel assemblies in some other proportion. For example, one extraction vessel may receive about 5, 10, 15, 20, 25, 30, 35, 40, or 45% of solvent flow, while the other extraction vessel receives the remaining share. In embodiments having more than two extraction vessels, such proportions may be established among each extraction vessel supplying feed solution. This proportioning may be accomplished by the action of splitter 522 or by the relative flow permitted by valve 531 and valve 532 or the portion may be allocated downstream of the extraction vessels by the action of any one or more of valve 533, valve 534, or coupler 524. In Step III, extraction vessel 542 is isolated from the system by closing valve 531 and valve 533, such that extraction vessel 542 neither receives nor supplies feed solution. In Step III, the system or user may remove or replace extraction vessel 542 with another extraction vessel, for example to replenish the supply of the sample being extracted, or to prepare for extraction of a different sample. During Step III, extraction vessel 544 continues to provide mobile phase with sample to the system. In Step IV, valve 531 is opened and mobile phase source 510 provides mobile phase to extraction vessel 542, but valve 533 is closed, such that there is no flow from extraction vessel 542. Step IV mirrors Step I, but with extraction vessel 544 supplying feed solution to feed injector 550 while the new extraction vessel 542 is saturated with extraction solvent to pre-treat and begin the extraction process. Subsequently, the system could be operated in Step II, such that both the new extraction vessel 542 and extraction vessel 544 provide sample, and then a step mirroring Step III, except in that extraction vessel 544 would be isolated allowing for extraction vessel 544 to be removed or replaced (not depicted). This step could then be followed by Step I, and the process repeated indefinitely.

The process of pressurizing an unused extraction vessel in a pre-treating step, as in Steps I and III may provide several advantages. The step may begin the extraction within those vessels, which reduces delay in bringing a new extraction vessel online. Some extraction vessels may function more effectively with an extended period to equilibrate before beginning to supply feed solution. Additionally, pressurizing the extraction vessel being pre-treated reduces any pressure drop across the system when the system switches to the unused extraction vessel. That extraction vessel may already be at the same pressure as the other extraction vessel. In highly-compressible fluid systems, maintaining pressure consistently and controllably is particularly important to avoid solute crashing or rapid phase changes. The use of a single extraction solvent source 510 and splitter 522, rather than two separate extraction solvent sources, may further assist maintenance of uniform pressure across the two extraction vessels and feed lines.

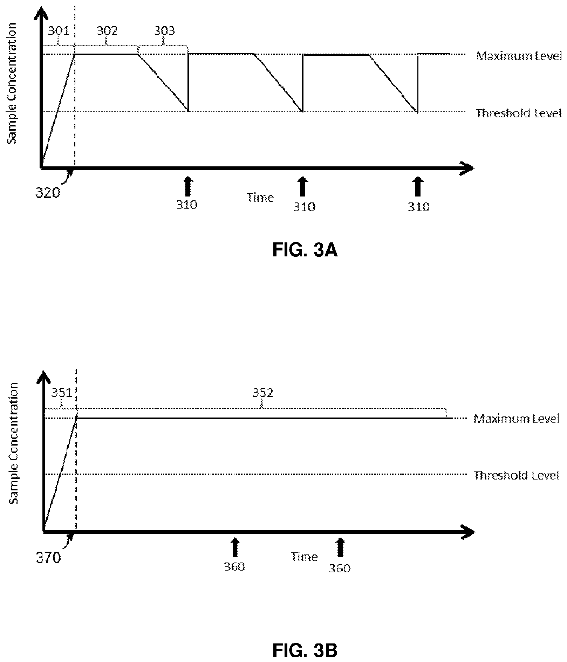

The operation of extraction system 500 of FIG. 5 or system 400 of FIG. 4 can provide feed solution corresponding to the sample concentration profile shown in FIG. 3A. As shown, there is some ramp-up period over which the sample output increases to a maximum, depicted as period 301. The system may be designed to exclude this portion, for example by providing feed solution from the extraction vessel only after the output is at least at the threshold level of concentration of sample or by pre-treating the first extraction vessel. At time 320, then sample concentration reaches the threshold level after which the concentration may be maintained at or above that level. Pre-treating of the extraction vessel permits rapid return to the desired concentration once a new (pre-treated) vessel is switched online. As shown here, the sample concentration may remain at approximately the maximum value for some period, here shown as period 302. This may be the solubility limit of the sample for the conditions within the extraction system, as determined by the composition of the extraction solvent, pressure, temperature, etc. Alternatively, the value may be some value lower than the solubility limit, for example due to choice of a flowrate such that the concentration of sample in the feed solution does not reach the solubility limit.

After period 302, the concentration supplied may begin to decrease as a result of the decreasing amount of sample present in the extraction vessel and accessible to the solvent. This period of decreasing concentration appears as Period 303. During any or all of periods 301, 302, and 303, a second extraction vessel may be prepared in another extraction vessel assembly by providing extraction solvent to the second extraction vessel. Once the second extraction vessel is ready to deliver feed solution having the maximum concentration, the solvent flow may be switched to that extraction vessel. Here, the time of the switch to the second extraction vessel appears as arrow 310. Because the second extraction vessel has been pre-treated for a sufficient period of time to generate feed solution having approximately the maximum level, the second extraction vessel may immediately provide the maximum level, as depicted in FIG. 3A. The result may be contrasted to the prior art result of FIG. 1, where the increase in concentration after placement of the new extraction vessel is gradual. It should be noted that the system may be operated to gradually replace the declining output of the first extraction vessel by providing a portion of output of the second extraction vessel, in which case the net decrease in concentration may be mitigated or avoided, as compared to the decrease depicted during Period 303 of FIG. 3A. Similarly, if the second extraction vessel is brought on-line gradually after the threshold level has been reached, a gradual increase in concentration may be observed, in contrast to the rapid increase indicated at arrow 310. Both of these forms of operation may be preferred where the user wishes to exhaust more fully each extraction vessel before removing it from the system.

Additionally, embodiments designed to operate in parallel and able to provide a feed stream proportionally from two or more vessels may be able to provide a consistent sample feed concentration similar to that of FIG. 3B, described in great detail below. This concentration profile may be achieved by increasing the proportion of the feed solution provided by the sample rich extraction vessel as the sample poor extraction vessels becomes increasingly depleted. In some circumstances, this concentration profile may also be achieved by adjusting timing of moving from Step I to Step II (see, Step I and Step II in FIG. 5). That is, altering the concentration profile to achieve a similar profile as shown in FIG. 3B may be accomplished by adjusting the time at which the pretreated extraction vessel 544 is brought online.

In other embodiments of the present technology, the device may additionally be provided with a detector, where the detector is situated downstream of the outlet port. The detector may be selected from a group including ultraviolet/visible light (UV-Vis) detectors, refractive index (RI) detectors, and conductivity monitors. In an embodiment, an ultraviolet detector may be used, and a window, or transparent section of tubing, may be installed downstream of the outlet port to permit detection of sample concentration within the mobile sample solution without diverting the sample solution from the flowpath. In an embodiment using an RI detector, the cell for the RI measurement may be placed downstream of the outlet port of the extraction vessel assembly. In an embodiment, a detector may be added to each extraction vessel assembly after the outlet port and after the second valve, but before the coupler, so that the detector can monitor flow from a single extraction vessel. The detector may additionally be placed downstream of the outlet port but upstream of the second valve so that the analysis may be performed even while the valve is closed. This configuration permits the extraction vessel to be brought online after the desired sample concentration is reported in the sample solution proximate the detector.

In other embodiments, the detector may be provided by delivering a portion of the feed flow to the detector. For example, in an embodiment a single detector may be used, wherein a valve added to each extraction assembly between the second valve and the coupler which may divert a portion of flow to the detector. Where the detector is non-destructive, downstream of the detector the flow may be returned to the flowpath before the coupler. Alternatively, the flow may be directed to waste after the detector, especially where the detector is a destructive detector. In such an embodiment, a portion of the flowpath may be used to monitor sample concentration without loss of the entire flowpath. The portion may be obtained, for example, by diverting a portion of the stream continuously, or a portion or the entire stream at successive brief intervals.

In embodiments where the extraction vessel assemblies are connected by a multi-port valve and have a detector, the point of connection to the detector may be provided by the multi-port valve in several ways. For example, the multi-port valve may be able to establish a fluid path from an extraction vessel assembly to a detector and from the detector back into the system. Alternatively, the point of connection of the detector to the system may be in or proximate the multiport valve. For example, where the point of connection to the detector is provided by a window through which a UV absorbance measurement may be made, the window may be within the multi-port valve, or in the tubing proximate the multi-port valve.

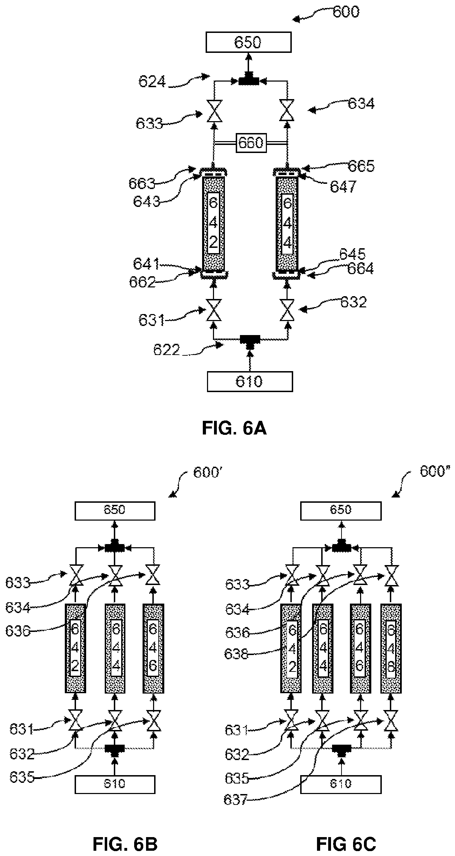

An embodiment of the present technology with a detector is shown in extraction system 600 of FIG. 6A. Extraction system 600 is provided with detector 660. The points of measurement used by detector 660 are between outlet port 663 and valve 633 and between outlet port 665 and valve 634. By situating the points of measurement in this way, the concentration of sample within the sample solution proximate the extraction vessel may be determined before the sample solution is provided through either valve 633 or valve 634 to feed injector 650. System 600 additionally includes splitter 622, valves 631, 632, 624, and 634, inlet ports 662 and 664, extraction vessels 642 and 644, coupler 624, and feed injector 650. Extraction vessel 642 has inlet 641 and outlet 643. Extraction vessel 644 has inlet 645 and outlet 647.

Additionally, embodiments of the present technology may be provided with more than two extraction vessel assemblies. For example, FIG. 6B shows extraction system 600' having three extraction vessel assemblies, and FIG. 6C shows extraction system 600" having four extraction vessel assemblies. Other embodiments may have more than four extraction vessel assemblies. Adding capacity to support additional extraction vessels to a system of the present technology provides a number of benefits: for extractions where the extraction itself is slow, providing additional vessels allows an extraction vessel to be saturated with extraction solvent for an extended period before drawing feed solution from that extraction vessel; when the process for replacing an extraction vessel is slow, additional extraction vessels may provide time for the system or user to replace an exhausted extraction vessel; where the full extraction of sample from the extraction vessel occurs quickly, the system will be able to switch among more extraction vessels before the operator or system must replace an extraction vessel; when extended operation without user intervention is desired, providing additional extraction vessels may allow the system to operate for a longer time without user intervention to replace extraction vessels, reducing system down-time and increasing throughput of the analytic or preparatory operation; when the user wishes to fully exhaust extraction vessels while maintaining sample concentration above the threshold level, providing additional extraction vessels permits continuing to draw from one or more extraction vessels providing low sample concentration until the exhaustion of those extraction vessels, while one or more further extraction vessels maintain concentration above the threshold level. System 600' provides a third extraction vessel shown as extraction vessel 646 along with valves 635 and 636. System 600" additionally adds a fourth extraction vessel shown as extraction vessel 648 along with valves 637 and 638.

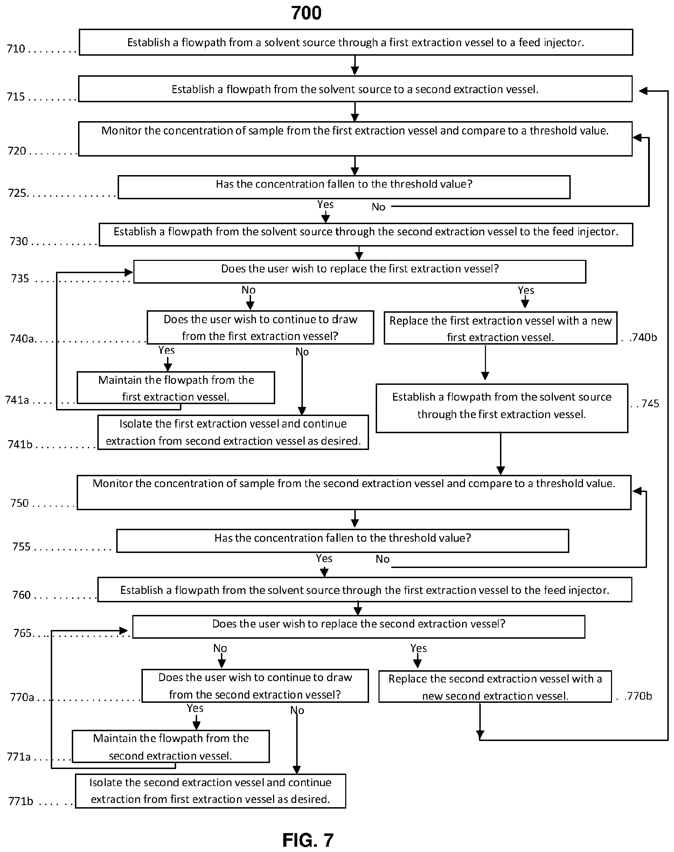

Method 700 of FIG. 7 describes a method according to an embodiment of the present technology using a system of extraction vessels in parallel. In step 710, the system establishes a flowpath from a solvent source through a first extraction vessel to a feed injector. This permits the first extraction vessel to provide feed solution to the chromatography system via the feed injector. Optionally, the first extraction vessel may be pre-treated.

In step 715, a flowpath is established from the solvent source to a second extraction vessel. This second extraction vessel will receive solvent so that pre-treating can occur, if required, but the second extraction vessel may remain offline.

Step 720 calls for monitoring the concentration of sample from the first extraction vessel and comparing that value to a threshold value. The threshold value is a value set by the user which is the minimum that the user requires for the feed solution. Step 725 asks whether the concentration has fallen to the threshold level. If not, the method calls for continued monitoring of the concentration. If the concentration has fallen to the threshold level, then step 730 calls for establishing a flowpath from the solvent source through the second extraction vessel to the feed injector and isolating the first extraction vessel. At this point of operation, the second extraction vessel previously pre-treated and held in reserve is used to supply feed solution to the chromatography system. Step 735 asks whether the user wishes to replace the first extraction vessel. If not, step 740a asks whether the user wishes to continue to draw from the first extraction vessel. If yes, step 740b calls for replacing the first extraction vessel with a new first extraction vessel (in this case, the third extraction vessel, but during subsequent iterations of the process, if used, a fifth extraction vessel, a seventh extraction vessel, and so on), and then proceeds to step 745. If the user does continue to draw from the first extraction vessel in step 740a then step 741a calls for maintaining the flowpath from the first extraction vessel, then returns to step 735. Is the user does not continue to draw from the first extraction vessel in step 740a, then step 741b calls for isolating the first extraction vessel and continuing the extraction from the second extraction vessel, as desired.

Step 745 calls for establishing a flowpath from the solvent source to the first extraction vessel, which begins pre-treating while the first extraction vessel is offline. Steps 750 and 755 mirror steps 720 and 725: the system monitors the concentration of sample from the second extraction vessel and compares that value to a threshold value. Once the concentration falls to a threshold value, step 760 calls for establishing a flowpath from the solvent source through the first extraction vessel to the feed injector while isolating the second extraction vessel. This permits the first extraction vessel to be used to provide feed solution. Then, step 765 asks whether or not the user wishes to replace the second extraction vessel. If not, step 770a asks whether the user wishes to continue to draw from the second extraction vessel. If yes, step 771a calls for maintaining the flowpath from the second extraction vessel then returning to step 765. If no, step 771b calls for isolating the second extraction vessel and continuing to extract from the first extraction vessel as desired. Is the user does wish to replace the second extraction vessel according to step 765, then step 770b calls for replacing the second extraction vessel with a new second extraction vessel (in this case, the fourth extraction vessel, but during subsequent iterations of the process, if used, a sixth extraction vessel, an eighth extraction vessel, and so on). Thereafter, the process may be repeated from step 715.

### Embodiments operating in series

Series type systems may provide solvent flow to more than one extraction vessel consecutively, with the final extraction vessel then providing sample feed for use in the system. Series operation additionally permits extraction vessels to increase the concentration of sample within the sample solution over two or more extraction vessels so that a desired feed solution sample concentration may be achieved even where a single extraction container may not provide adequate or consistent sample concentration alone. The final concentration of sample in the feed solution as delivered will be principally controlled by the final extraction vessel.

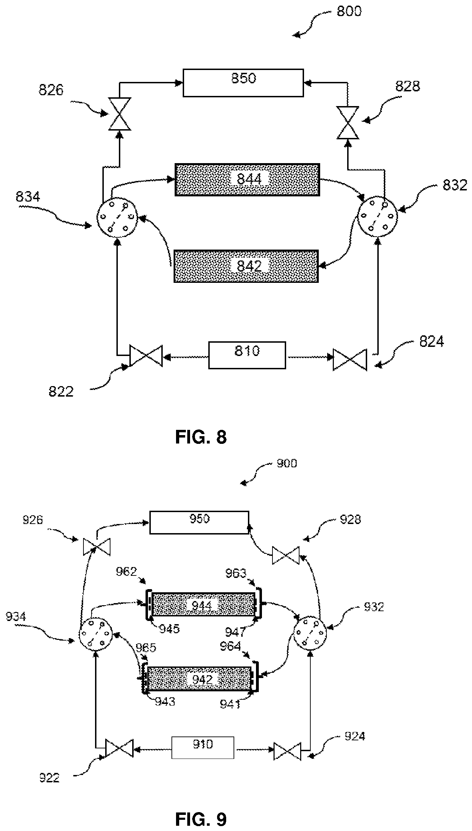

FIG. 8 shows extraction system 800 according to an embodiment of the present technology with two extraction vessels, extraction vessel 842 and extraction vessel 844, according to an embodiment of the present invention. Extraction system 800 may operate in at least four modes. In the first mode of operation, valve 824 is open and valve 832 is actuated to provide fluid communication between extraction solvent source 810 and extraction vessel 842, and valve 834 is actuated to provide fluid communication between extraction vessel 842 and valve 826, and valve 826 is open to permit flow to feed injector 850; valve 822 and valve 828 are closed, isolating extraction vessel 844 from the flowpath. In the first mode of operation, mobile phase source 810 pressurizes a flowpath through extraction vessel 842 to feed injector 850. In the first mode of operation, extraction vessel 844 may be removed from the system and replaced with another extraction vessel, if replacement is desired by the user.

In the second mode of operation, valve 824 is opened and valve 832 is actuated to provide fluid communication between mobile phase source 810 and extraction vessel 842, and between extraction vessel 844 and valve 828, and valve 834 is actuated to provide fluid communication between extraction vessel 842 and extraction vessel 844, and valve 828 is open to permit flow to injection point 850; valve 822 and 826 are closed. In the second mode of operation, extraction solvent source 810 pressurizes a flowpath through extraction vessel 842 and extraction vessel 844 to feed injector 850.

In the third mode of operation, valve 822 is open and valve 834 is actuated to provide fluid communication between valve 822 and extraction vessel 844, and valve 832 is actuated to provide fluid communication between extraction vessel 844 and valve 828, valve 828 is open to allow flow to feed injection 850, valve 824 and valve 826 are closed to isolate extraction vessel 842. In the third mode of operation, extraction solvent source 810 pressurizes a flowpath through extraction vessel 844 to feed injector 850. In the third mode of operation, extraction vessel 842 may be removed from the system and replaced with another extraction vessel, if replacement is desired by the user.

In addition to the foregoing, modes may be added to provide for pre-treating extraction vessels. For example, in a fifth mode, similar to the third mode but with valve 824 open and valve 832 providing fluid communication from extraction solvent source 810 through valve 824 and valve 832 to extraction vessel 842 and with valve 834 deployed such that solvent flow from extraction vessel 842 is not permitted, extraction vessel 842 may be pretreated. Similarly, a corresponding mode would permit pretreatment of extraction vessel 844 during the operation of extraction vessel 842.

In the fourth mode of operation, valve 822 is open and valve 834 is actuated to establish fluid communication between valve 822 and extraction vessel 844 and between extraction vessel 842 and valve 826; valve 832 is actuated to established fluid communication between extraction vessel 844 and extraction vessel 842; valve 824 and valve 828 are closed. In the fourth mode of operation, extraction solvent source 810 pressurizes a flowpath through extraction vessel 844 and extraction vessel 842 to feed injector 850. This may be accomplished by use of valves 822, 824, 826, and 828.

While extraction system 800 provides for four modes, only three configurations of each of valves 832 and 834 are required. For valve 832, the same configuration may be used for the first and fourth modes of operation. For valve 834, the same configuration may be used in both the second and third mode of operation, with one flowpath not being pressurized.

The results of operating extraction system 800 of FIG. 8 to maintain a constant concentration of sample in the feed solution is depicted in FIG. 3B. FIG. 3B shows a profile of concentration over time. FIG. 3B shows that during some initial period the concentration of sample will increase until reaching a desired level. This can constitute a pre-treating period before feed solution is supplied from the extraction vessel. This period is shown as period 351. Subsequently, extraction system 800 can deliver an approximately constant concentration of sample at the maximum level, depicted as period 352. This result is achieved by operating the two extraction vessels in sequence so that whenever an extraction vessel indicates a decreasing sample concentration, for example, as depicted by period 303 of FIG. 3A, that deficiency in sample concentration in the sample solution is satisfied by the contribution of sample from a second treated extraction vessel downstream of the first extraction vessel. Thus, there is no decrease in the feed solution concentration up to the time of the first extraction vessel substitution depicted by the arrow at 360. The first extraction vessel may reach full exhaustion around the same time as the extraction vessels of FIG. 1 since that extraction vessel is exposed to substantially the same conditions. The second vessel may last for less time since it has already been providing sample concurrently with the first extraction vessel.

With respect to extraction system 800 of FIG. 8, this sustained concentration output with full exhaustion of extraction vessels may be obtained by permitting the system to operate in either sequence, *i.e.* with extraction solvent first entering extraction vessel 842 then extraction vessel 844, or first entering extraction vessel 844 then extraction vessel 842. Operating the system so that the sample poor extraction vessel is placed in the first position and the sample rich extraction vessel in the second, may be preferred because the extraction solvent entering the sample-poor extraction vessel can continue to extract sample in order to efficiently and maximally utilize that extraction vessel, while the subsequent sample-rich extraction vessel may be used to ensure that the concentration of sample within the feed solution reaches the desired level. Thus, the concentration of sample in the feed solution will generally increase from the first extraction vessel to the second, or over more than two extraction vessels for embodiments having more than two extraction vessels. In some cases, for example, when the amount of sample in the sample-poor vessel is still considerable, and if the extraction process is very efficient or if the desired concentration is very low, the feed solution may contain the required level of sample even before it is provided to the second extraction vessel. Conversely, care may be taken to avoid a situation where a sample poor extraction vessel in the second position absorbs sample from the sample solution.

System 800 can provide solvent flow in the same direction through each extraction vessel regardless of the order in which the extraction vessels are placed in the flowpath. For example, whether extraction vessel 842 is operated alone, as the first of two sequential extraction vessels, or as the second of two sequential extraction vessels, the flow of extraction solvent through the vessel is from right to left (as depicted). In the same way, the flow through extraction vessel 844 is always left to right (as depicted). This optional feature permits switching between different modes of operation without a delay in output from the extraction system as would be required if the direction of mobile phase flow was to be reversed. Additionally, this embodiment is also advantageous for an extraction vessel for which the ends are not interchangeable.

Extraction system 900 of FIG. 9 shows an embodiment in which multiport valves 934 and 932 subsume the functions of valves 822, 824, 826, 828, as well as controlling flow between and among extraction vessels 944 and 942, extraction solvent source 910 and feed injector 950. Additionally, extraction system 900 shows inlet ports 962 and 964 and outlet ports 963 and 965. As shown, extraction system 900 is provided with extraction vessel 942 which has inlet 941 which mates to inlet port 964 and outlet 943 which mates to outlet port 965, and extraction vessel 944 which has inlet 945 which mates to inlet port 962 and outlet 947 which mates to outlet port 963. In extraction system 900, either of multiport valves 934 and 932 can provide sample directly to feed injector 950.

Extraction system 900 additionally provides an example of an extraction system that may be operated in both series-type and parallel-type extraction modes, provided that multiport valves 934 and 932 may be actuated so as to deliver solvent to both of extraction vessels 944 and 942 and then provide sample-provided portions of solvent extraction vessels 944 and 942 to the feed injector 950. By using multiport valve 934 and 932 to establish these flowpaths, extraction system 900 may be operated in parallel.

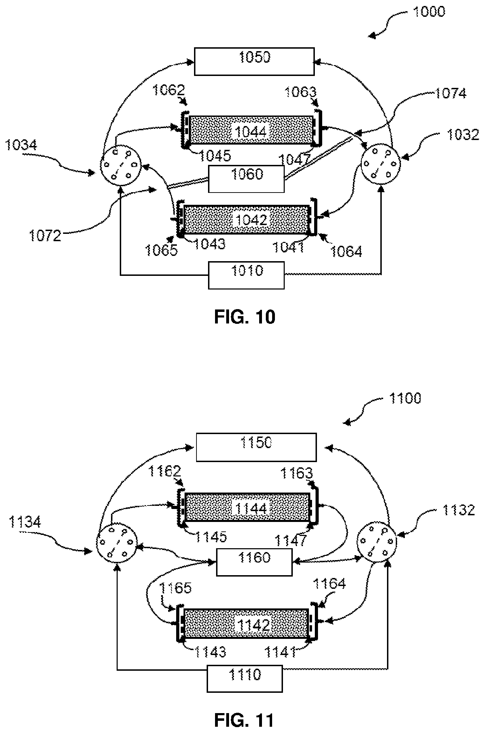

Extraction system 1000 of FIG. 10 is provided with detector 1060. Detector 1060 measures the sample concentration at points of measurement 1072 and 1074. By situating the points of measurement in this way, the concentration of sample within the sample solution proximate the extraction vessel may be determined before the sample solution is provided through the either multiport valve 1032 or 1034. Extraction system 1000 is particularly appropriate for a UV-Vis or RI detector or a conductivity monitor, where the measurement may be taken by inserting an optical window or measurement cell at each of points of measurement 1072 and 1074 so that the measurement may be taken as the sample solution passes through those measurement points. Detector 1060 can be a single unit detector as shown in FIG. 10. Alternatively, Detector 1060 can be replaced with two different dedicated detectors, one located before valve 1034 along 1072 and one located before valve 1032 along 1074. Extraction system 1000 additionally includes extraction solvent source 1010, feed injector 1050, inlet ports 1062 and 1064, outlet ports 1063 and 1065 and extraction vessels 1042 and 1044. Extraction vessel 1042 has inlet 1041 and outlet 1043. Extraction vessel 1044 has inlet 1045 and outlet 1047.

Extraction system 1100 of FIG. 11 is provided with detector 1160. Detector 1160 measures the sample concentration by using multiport valves 1132 and 1134 to divert a portion of the sample solution to detector 1160 to permit the measurement to be made. While this approach could be used for many detector types, system 1100 is particularly useful, as compared to system 1000, for a detector where a portion of the feed solution must be introduced into the detector for the measurement (e.g. flame ionization detector (FID), atomic absorbance spectrometer (AAS), or mass spectrometer (MS)). Extraction system 1100 additionally includes extraction solvent source 1110, inlet ports 1162 and 1164, outlet ports 1163 and 1165, extraction vessels 1142 and 1144, and feed injector 1150. Extraction vessel 1142 has inlet 1141 and outlet 1143. Extraction vessel 1144 has inlet 1145 and outlet 1147.

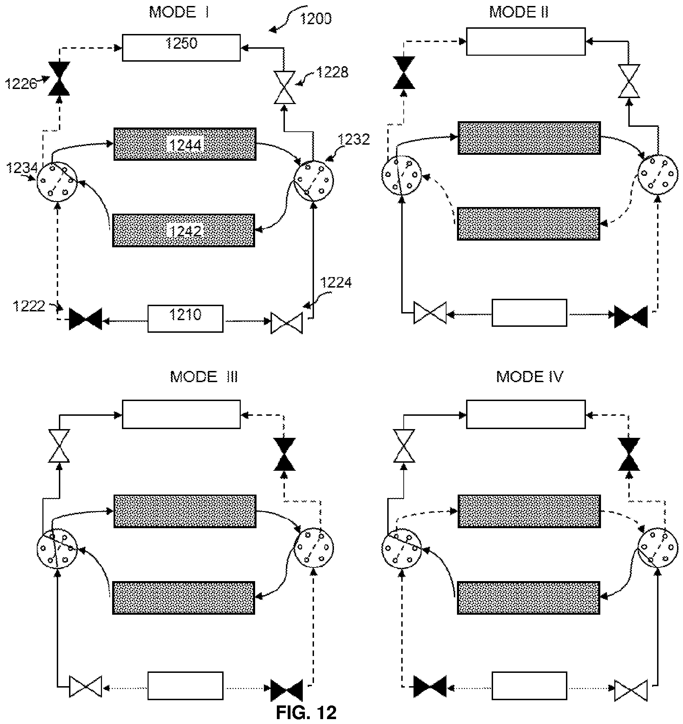

FIG. 12 shows four operational modes for extraction system 1200, which is equivalent to extraction system 800. In FIG. 12, a filled-in valve figure indicates a closed valve and an unfilled valve figure indicates an open valve.

Mode I may be used when extraction vessel 1242 is the sample-poor extraction vessel and extraction vessel 1244 is the sample-rich extraction vessel-that is, extraction solvent is first provided from extraction solvent source 1210 to extraction vessel 1242 to fully exhaust the sample supply therein, then provided to extraction vessel 1244 to supply additional sample, if any, required to reach the sample concentration required in the feed solution. In Mode I, valve 1222 is closed, and extraction solvent source 1210 pressurizes a flow of extraction solvent through valve 1224, multiport valve 1232, extraction vessel 1242, multiport valve 1234, extraction vessel 1244 multiport valve 1232 and valve 1228 to feed injector 1250.

Mode II may be used when extraction vessel 1242 is exhausted and will be replaced or is being pre-treated while extraction vessel 1244 is providing feed solution to feed injector 1250. In Mode II, valve 1224 is closed, and extraction solvent source 1210 pressurizes a flow of extraction solvent through valve 1222, multiport valve 1234, extraction vessel 1244, multiport valve 1232, and valve 1228 to feed injector 1250.

Mode III may be used when extraction vessel 1244 is the sample-poor extraction vessel and extraction vessel 1242 is the sample-rich extraction vessel-that is, extraction solvent is first provided to extraction vessel 1244 to fully exhaust the sample supply therein, then provided to extraction vessel 1242 to supply additional sample, if any, required to reach the sample concentration required in the feed solution. In Mode III, valve 1224 is closed, and extraction solvent source 1210 pressurizes a flow of extraction solvent through valve 1222, multiport valve 1234, extraction vessel 1244, multiport valve 1232, extraction vessel 1242 multiport valve 1234 and valve 1226 to feed injector 1250.

Mode IV may be used when extraction vessel 1244 is exhausted and will be replaced or is being pre-treated while extraction vessel 1242 is providing feed solution to feed injector 1250. In Mode IV, valve 1222 is closed, and extraction solvent source 1210 pressurizes a flow of extraction solvent through valve 1224, multiport valve 1232, extraction vessel 1242, multiport valve 1234, and valve 1226 to feed injector 1250.

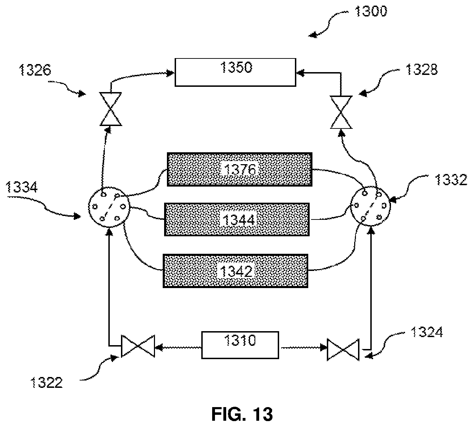

Additionally, systems may have three or more extraction vessel assemblies, such as system 1300 depicted in FIG. 13, having extraction vessel assemblies 1376, 1344, 1342. System 1300 additionally has extraction solvent source 1310, valves 1322, 1324, 1326, and 1328, multiport valves 1332 and 1334, and feed injector 1350.

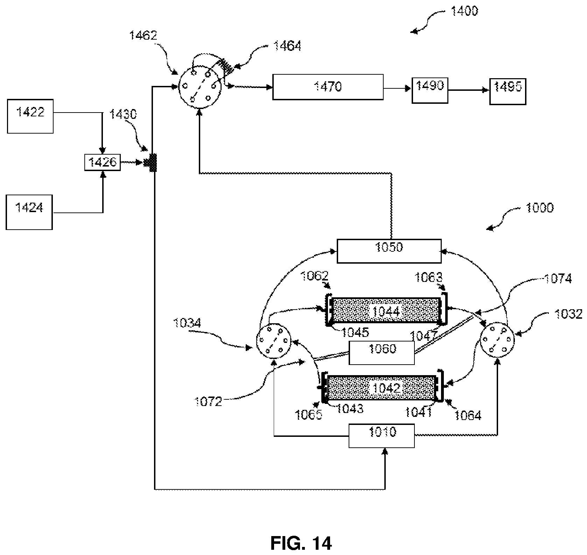

FIG. 14 shows how sample extraction system 1000 could interface with a chromatography system 1400, where chromatography system 1400 utilizes a sample loop 1464 to load sample onto chromatography column 1470. By means of flow controller 1430, extraction system 1000 may be fed the mobile phase prepared by mobile phase source 1422, co-solvent source 1424 and connector or mixer 1426, at mobile phase source 1010, such that the same solvent is used as the mobile phase for extraction system 1000 and as mobile phase in chromatography column 1470. Extraction system 1000 shows a feed injector 1050. By operation of the feed injector 1050, feed solution prepared by extraction system 1000 is provided through multiport valve 1462 to sample loop 1464. Multiport valve 1462 may then be actuated to introduce the contents of sample loop 1464 to chromatography column 1470. Downstream of chromatography column 1470, chromatography system 1400 includes detector 1490 and back pressure regulator 1495.

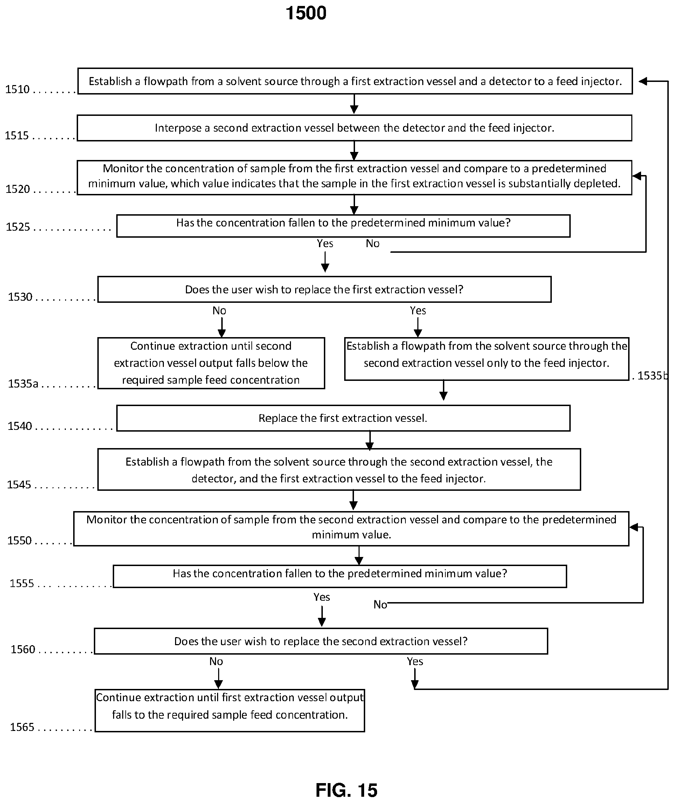

Method 1500 given in FIG. 15 describes a method for operating a set of extraction vessels in series. In step 1510, the system establishes a flowpath from a solvent source through a first extraction vessel and a detector to a feed injector. This permits the first extraction vessel to provide feed solution to the chromatography system via the feed injector. Optionally, the first extraction vessel may be pre-treated, if necessary to achieve the concentration required of the feed solution.

Step 1515 calls for interposing a second extraction vessel between the detector *(i.e.,* after the first extraction vessel) and the feed injector. This second extraction vessel will be a new extraction vessel supplied with sample. By providing sample solution from the first extraction vessel to the second extraction vessel, the second extraction vessel may provide additional sample if necessary to achieve the level desired for the feed solution (for example, this may be full saturation, if desired, as determined by the extraction solvent, temperature, pressure, etc.). Additionally, the provision of sample solution to the second extraction vessel will constitute a pre-treating step.

Step 1520 calls for monitoring the concentration of sample from the first extraction vessel and comparing that value to a predetermined minimum value, which value indicates that the sample in the first extraction vessel is substantially depleted. Since the second extraction vessel is deployed after the first extraction vessel, the feed solution being provided to the feed injector will continue to have the sample concentration required of the feed solution provided that the second extraction vessel has sufficient sample to achieve that concentration. The predetermined minimum value may correspond to the point at which the vessel is fully exhausted, or some earlier point as determined by the user.

Step 1525 asks whether the output has reached the predetermined minimum value. If not, the monitoring continues. Otherwise, step 1530 asks whether the user wishes to replace the first extraction vessel. If not, step 1535a calls for continuing the extraction until the second extraction vessel output falls below the predetermined minimum value, or the user may stop the process earlier, if desired. Step 1535b calls for establishing a flowpath through the second extraction vessel only to the feed injector. This will isolate the first extraction vessel from the system. Once isolated, step 1540 calls for replacing the first extraction vessel with a new first extraction vessel (in the first iteration this will be the third extraction vessel overall, but during subsequent iterations of the process, if used, a fifth extraction vessel, a seventh extraction vessel, and so on).

Step 1545 calls for establishing a flowpath from the solvent source through the second extraction vessel, the detector, and the first extraction vessel to the feed injector. In this step, the second extraction vessel is now the sample-poor extraction vessel which provides an initial portion of sample before the sample solution is provided to the new first extraction vessel (now the sample-rich extraction vessel) which provides any additional portion of sample required to constitute the feed solution.

Steps 1550 and 1555 call for monitoring the output of the second extraction vessel to determine when it reaches the pre-determined minimum level. Step 1560 asks whether the user wishes to replace the second extraction vessel. If not, step 1565 calls for continuing the extraction until the first extraction vessel output falls below the concentration required of the feed solution, or the user may stop the extraction earlier if desired. If the user wishes to replace the second extraction vessel, then method 1500 returns to step 1510 to establish a flowpath from the solvent source through the first extraction vessel through the detector to the feed injector, isolating the second extraction vessel and permitting it to be replaced with a new second extraction vessel (in the first iteration this will be the fourth extraction vessel overall, but during subsequent iterations of the process, if used, a sixth extraction vessel, an eighth extraction vessel, and so on).

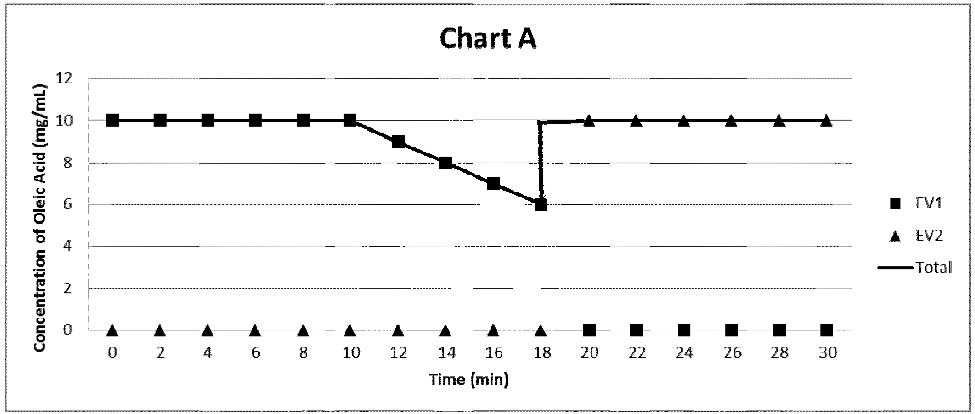

Chart A shows an extraction system operating in parallel providing feed solution of at least a threshold concentration for an extended period. This embodiment uses system 600 of FIG. 6A, an embodiment of the present technology having two extraction vessels which may operate in parallel to perform a pressurized solvent extraction using an extraction solvent mixture of 98% hexane and 2% methanol to extract oleic acid from a solid matrix within each of two extraction vessels. The extraction vessels are each 100 mL vessels. The extraction is conducted at 50°C and a pressure of 250 bar (approximately 3600 psi). For the purposes of this embodiment, the user wishes to obtain the maximum possible concentration of oleic acid in the feed solution, and establishes a minimum threshold concentration of 6 mg/mL.

Referring to FIG. 6 and Chart A above, initially, an extraction vessel ("EV1") or a first extraction vessel is loaded as extraction vessel 642 and a flowpath is established from extraction solvent source 610 to EV1 through valve 631. Valve 633 is closed so that flow from EV1 is not permitted for an initial period, during which the extraction solvent mixture extracts a portion of oleic acid from the matrix. Detector 660 is set to monitor the absorbance at 220nm, which is known to be absorbed by oleic acid. Detector 660 shows an increasing absorbance as the extraction proceeds and approaches maximum saturation. When detector 660 reports an approximately constant absorbance reading, indicating full saturation, valve 633 is actuated to provide solvent flow from EV1 to coupler 624 and feed injector 650.

Feed injector 650 provides this feed solution to the chromatography system and to the chromatography column for the preparatory separation of oleic acid. The point at which feed solution is initially provided is reported as 0 min on Graph A. In this case, full saturation is 10 mg/mL, which corresponds to the concentration of oleic acid in the feed solution. EV1 continues to provide sample solution at 10mg/mL for 10 minutes. This is confirmed by the absorbance readings reported by UV detector 660. During this ten minute period, a second extraction vessel ("EV2") is loaded as extraction vessel 644. Valve 632 is opened to provide extraction solvent flow to EV2. Valve 634 remains closed so that flow from EV2 is not permitted. Detector 660 reports that the concentration of oleic acid in the extraction solvent mixture proximate EV2 reaches full saturation at some time before 18 min. (Note that the ability of EV2 to provide full saturation within the time period before EV1 reaches the threshold limit results from the characteristics of oleic acid, the matrix in the extraction vessels, and the characteristics of the extraction, including the solvents, temperature, and pressure used and the flow rate through EV1 *(i.e.,* the rate at which EV1 is exhausted)). For other combinations, these factors may be adjusted to ensure that EV2 is prepared to come on-line when EV1 is sufficiently exhausted that the output concentration falls to the threshold level of sample concentration. For example, EV2 may be subjected to higher temperature and pressure to increase the extraction rate, or flow rate from EV1 may be reduced to prolong the period during which EV1 provides feed solution. Additionally, a system with more than two extraction vessels, such as FIG. 6B or 6C may be used.

As shown in Chart A, after 10 minutes, the concentration of oleic acid in the sample solution provided by EV1 begins to decrease. The value continues to decrease until reaching the minimum threshold level of 6 mg/mL at about 18 minutes. At this point, EV2 being fully prepared, valve 634 is opened and valve 633 is closed to switch the supply from EV1 to EV2. Valve 631 may also be closed to isolate and permit the removal of EV1. This is indicated on Graph A by the triangular symbol indicating EV2. As shown, the return to the maximum value of 10mg/mL will be near instantaneous since EV2 has been pretreated. EV2 then continues to provide the feed solution to the solution for the remainder of the 30 minute period indicated. If the user wished to continue beyond that period of time, a third extraction vessel ("EV3") may be added as extraction vessel 642 (i.e., to replace EV1) and the extraction process started again as with EV2. In this way, the feed solution may be supplied for an extended duration.

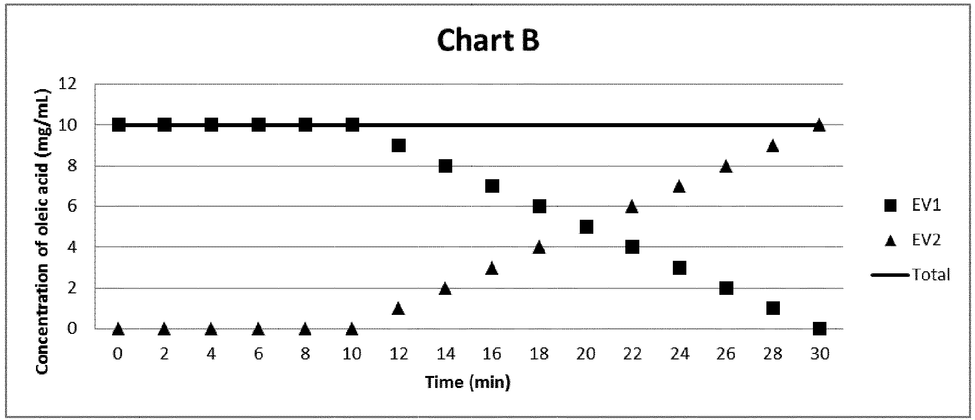

Chart B shows an extraction system operating in series providing feed solution of a constant concentration for an extended period. This embodiment uses sample extraction system 1000 of FIG. 10, an embodiment of the present technology having two extraction vessels which may operate in series. In the embodiment shown in Chart B, a highly-compressible fluid extraction using an extraction solvent mixture of 95% CO₂ and 5% isopropyl alcohol to extract oleic acid from a loose, solid sample within each of two extraction vessels is provided. The extraction vessels are each 100 mL vessels. The extraction is conducted at 50°C and a pressure of 350 bar (approximately 5100 psi).

Referring to FIG. 10 and Chart B, initially, an extraction vessel or first extraction vessel ("EV1") is loaded as extraction vessel 1042 and a flowpath is established from mobile phase source 1010 to EV1 by multi-port valve 1032. Multiport valve 1034 is actuated so that flow from EV1 is not permitted for an initial period, during which the extraction solvent mixture extracts a portion of oleic acid from the matrix. Detector 1060 is an ultra-violet detector. Detector 1060 is set to monitor the absorbance at 220 nm, which is known to be absorbed by a principle component of oleic acid. Detector 1060 shows an increasing absorbance as the extraction proceeds and approaches maximum saturation. When detector 1060 reports an approximately constant absorbance reading, indicating full saturation, multi-port valve 1034 is actuated to provide solvent flow from EV1 to feed injector 1050. Feed injector 1050 provides this feed solution to the chromatography system and to the chromatography column for the preparatory separation of oleic acid. The point at which feed solution is initially provided is reported as 0 min in Chart B. In this case, full saturation is 10 mg/mL, which corresponds to the concentration of Example Y in the feed solution.

EV1 continues to provide feed solution at 10 mg/mL for 10 minutes. This is confirmed by the absorbance readings reported by UV detector 1060. During this ten minute period, a second extraction vessel ("EV2") is loaded as extraction vessel 1044. Multi-port valve 1034 is actuated so that it continues to provide a flow of sample solution from EV1 and begins to provide a flow of extraction solvent mixture to EV2. Multi-port valve 1032 continues to block flow from EV2.

UV detector 1060 continues to monitor the concentration of Example Y in flow from EV1 and in the extraction solution saturating EV2. After detector 1060 indicates that the solution saturating EV2 is fully saturated, EV2 is brought online by actuating multi-port valves 1032 and 1034 to establish a fluid flow through first EV1 and then EV2 to the feed injection 1050. By creating this order, the more fully-loaded extraction vessel (EV2) is last sequentially and will ensure that the solution provided to feed injector 1050 is fully saturated. However, the sample solution provided from EV1 will initially be fully saturated and no net additional sample will be provided by EV2. (Note that some amount of exchange of oleic acid within the sample solution *(i.e.,* from EV1) and the oleic acid within EV2 will occur during this period, but there will be no decrease in the total amount of oleic acid within EV2 as long as the sample solution provided to EV2 is fully saturated with oleic acid.)

Detector 1060 continues to monitor the concentration of oleic acid in the flowpath from EV1. As shown in Chart B, at 10 minutes, the concentration begins to decrease, indicating that the amount of oleic acid remaining in EV1 has diminished to such a degree that EV1 cannot provide a maximally saturated feed solution. However, EV2 can provide the remaining portion of oleic acid to achieve a maximally-saturated solution as the extraction solution passes through EV2. As shown in Chart B, the portion of the oleic acid in the feed solution provided by EV1 continues to decrease from 10 to 30 minutes, the difference being made-up by an increasing portion of oleic acid provided by EV2. At 30 minutes, EV1 is fully exhausted. This embodiment, the results provided in Chart B, demonstrates that the present technology can provide for extended, maximally-concentrated feed solution while fully exhausting the sample supply in each extraction vessel.

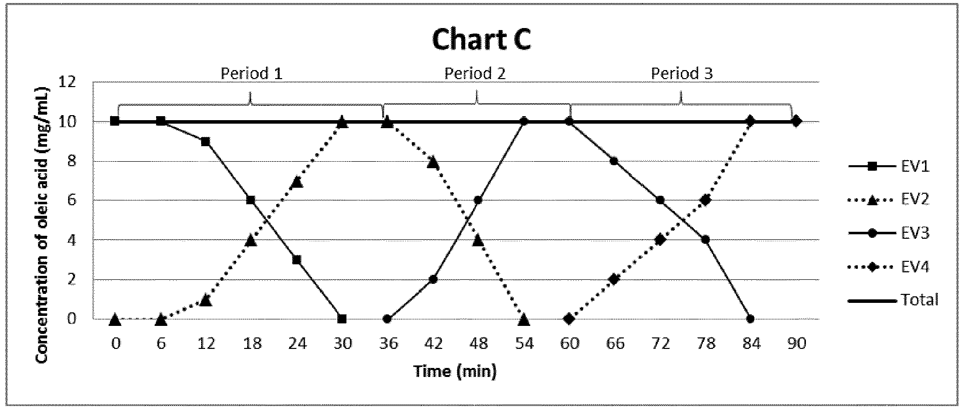

Chart C shows a further extension of the embodiment depicted in Chart B. That is, Chart C shows results from a system similar to that described with respect to Chart B, but further including additional extraction vessels. In Chart C, the first thirty minutes of Period 1 corresponds to Chart B. In the embodiment with results depicted in Chart C, once EV1 has become exhausted at 30 minutes, multi-port valves 1032 and 1034 are actuated so as to isolate EV1 and to provide flow to feed injector 1050 only from EV2. Once EV1 is isolated, EV1 can be replaced with a third extraction vessel ("EV3") as extraction vessel 1042. Then multi-port valves 1032 and 1034 are actuated to provide a flowpath through EV2 to feed injector 1050 and additionally to provide a path from extraction solvent source 1010 to EV3 to saturate EV3 and begin the extraction process in EV3. Detector 1060 monitors the concentration of oleic acid in the solution saturating EV3. Once the concentration in the solution saturating EV3 shows saturation with sample, multiport valves 1032 and 1034 are actuated to establish a flowpath from extraction solvent source 1010 through EV2 and then through EV3 to feed injector 1050. Period 2 shows the time over which sample supplied by EV2 declines and sample supplied by EV3 increases. As shown in Chart C, the output from EV2 begins to decline from the maximum level after about 36 minutes. After 36 minutes, the concentration of oleic acid provided by EV2 begins to decrease, with the difference being made up by EV3, as shown. It will be appreciated that because EV2 provided a partial flow for some period before providing saturated flow, it will have less sample present when it begins to provide saturated sample than did EV1. As a result EV2 (and each subsequent extraction vessel) will provide a saturated solution for a shorter time, or exhibit a faster decrease thereafter, or both, as indicated in Chart C.

As shown, EV2 continues to provide oleic acid, in decreasing proportion, until about 54 minutes, at which point it is exhausted. Thereafter, EV2 is isolated and replaced with a fourth extraction vessel ("EV4"), and EV4 is pretreated, while EV3 continues to provide feed solution. Then, a flowpath is established such that EV3 provides flow to EV4 and the process is repeated. Period 3 shows the time over which sample supplied by EV3 declines and sample supplied by EV4 increases. As shown, the total oleic acid concentration provided from the system throughout the period is essentially constant, as shown in Chart C, throughout the 90 minute period shown. It will also be appreciated that the process of switching extraction vessels could be continued for an extended period, limited principally by any maintenance required on the system.

One of ordinary skill in the art will appreciate further features and advantages of the invention based on the above-described embodiments. Accordingly, the invention is not to be limited by what has been particularly shown and described, except as indicated by the appended claims.

## Claims

1. A sample extraction system (400) capable of providing sustained delivery of feed solution to a system, the sample extraction system comprising:
(a) an extraction solvent source (410), wherein the extraction solvent comprises a fluid selected from a group consisting of (i) an organic solvent maintained at or above 86.2 bar (1250 psi) and (ii) CO2;
(b) a splitter (422) in fluid communication with the extraction solvent source, the splitter for providing two or more fluid paths downstream of the splitter;
(c) a first extraction vessel assembly (442) and a second extraction vessel assembly (444), each extraction vessel assembly comprising a first valve (431, 432), an inlet port (462, 464), an outlet port (463, 467), and a second valve (433, 434), the first valve being connected to the splitter, the inlet port being connected to the first valve and to an inlet (441, 445) of an extraction vessel, and the outlet port being connected to an outlet (443, 447) of the extraction vessel and being connected to the second valve;
(d) a coupler (424), in fluid communication with the second valve of each of the first extraction vessel assembly and the second valve of the second extraction assembly, the coupler for receiving fluid flow from the two or more fluid paths upstream and delivering combined flow to a single stream downstream of the coupler; and
(e) a feed injector (450) in fluid communication with the coupler, the feed injector capable of providing a feed of extraction solvent supplied with sample for use in the system.

2. The sample extraction system (400) of claim 1, further comprising three or more extraction vessel assemblies.

3. The sample extraction system (400) of claim 1, wherein each of the first extraction vessel assembly (442) and the second extraction vessel assembly (444) are additionally provided with a connection to a detector, the point of connection within each extraction vessel assembly being downstream of the outlet port and upstream of the coupler (424).

4. The sample extraction system (400) of claim 1, additionally provided with a carousel and a switching arm, wherein the carousel comprises one or more extraction vessel holders, and the switching arm is capable of placing extraction vessels into, and removing extraction vessels from, any of: the first extraction vessel assembly, the second extraction vessel assembly, and one or more of the extraction vessel holders of the carousel.

5. The sample extraction system (400) of claim 1, wherein the splitter (422) is capable of proportionally providing variable flowrates of extraction solvent to each of the first extraction vessel assembly (442) and the second extraction vessel assembly (444).

6. The sample extraction system (400) of claim 1, wherein the system is provided with a sample loop to provide sample injection onto a chromatography column and wherein the feed injector of the sample extraction system is in fluid communication with the sample loop.

7. The sample extraction system (400) of claim 1, wherein the first extraction vessel assembly (442) and the second extraction vessel assembly (444) each additionally comprises an independently controllable heat source.

8. The sample extraction system (400) of claim 1, wherein each of the first extraction vessel assembly (442) and the second extraction vessel assembly (444) include independent pressure control.

9. A sample extraction system (800, 900) capable of providing sustained delivery of a feed solution having an approximately constant concentration of sample, the sample extraction system comprising,
(a) an extraction solvent source (810, 910);
(b) a first multi-port valve (834, 934) connected to the extraction solvent source (810, 910);
(c) a first extraction vessel assembly (844, 944) and a second extraction vessel assembly (842, 942), each extraction vessel assembly (844, 944, 842, 844) comprising an inlet port (962, 964) and an outlet port (963, 965), wherein the inlet port (962) of the first extraction vessel assembly (844, 944) is connected to the first multi-port valve (834, 934) and the outlet port (965) of the second extraction vessel assembly (842, 942) is connected to the first multi-port valve (834, 934); and
(d) a second multi-port valve (832, 932) in fluid communication with the first and second extraction vessel assemblies (844, 944, 842, 844), wherein the outlet port (963) of the first extraction vessel assembly (844, 944) is connected to the second multi-port valve (832, 932) and the inlet (964) of the second extraction vessel assembly (842, 942) is connected to the second multi-port valve (832, 932);
wherein the first multi-port valve (834, 934) and the second multi-port valve (832, 942) are configured to establish multiple fluid circuits from the extraction solvent source (810, 910) through each extraction vessel assembly (844, 944, 842, 844) individually or through both extraction vessel assemblies (844, 944, 842, 844) in sequence, to an outlet port of the system (800, 900).

10. The sample extraction system (800, 900) of claim 9, wherein the outlet port of the system is fluidly connected to a chromatography system.

11. The sample extraction system (800, 900) of claim 9, provided with three or more extraction vessel assemblies.

12. The sample extraction system (800, 900) of claim 9, additionally provided with a carousel and a switching arm, wherein the carousel comprises a plurality of extraction vessel holders, and the switching arm is capable of placing extraction vessels into, and removing extraction vessels from, any of: the first extraction vessel assembly (844, 944), the second extraction vessel assembly (842, 942), and one or more of the extraction vessel holders of the carousel.

13. The sample extraction system (800, 900) of claim 9, wherein each of the first extraction vessel assembly (844, 944) and the second extraction vessel assembly (842, 942) are additionally provided with a connection to a detector, the point of connection being downstream of the outlet port, preferably wherein the chromatography system is provided with a sample loop to provide sample injection onto a chromatography column and wherein the feed injector of the sample extraction system is in fluid communication with the sample loop.

14. The sample extraction system (800, 900) of claim 9, wherein the first extraction vessel assembly (844, 944) and the second extraction vessel assembly (842, 942) each additionally comprises an independently controllable heat source.

15. A sample extraction system (800, 900) of claim 9, wherein each multiport valve is connected to the extraction solvent source and to an outlet of the system.

## Patentansprüche

1. Probenextraktionssystem (400), das fähig ist, anhaltende Lieferung von Zuführungslösung zu einem System bereitzustellen, wobei das Probenextraktionssystem umfasst:
(a) eine Quelle (410) für Extraktionslösungsmittel, wobei das Extraktionslösungsmittel eine Flüssigkeit umfasst, die aus einer Gruppe selektiert wurde, die aus (i) einem organischen Lösungsmittel, das auf oder über 86,2 bar (1250 psi) beibehalten wurde, und (ii) CO₂ besteht;
(b) einem Strömungsteiler (422) in Flüssigkeitsverbindung mit der Quelle für Extraktionslösungsmittel, wobei der Strömungsteiler zwei oder mehr Flüssigkeitswege bereitstellt, die dem Strömungsteiler nachgeschaltet sind;
(c) eine erste Extraktionsgefäß-Baugruppe (442) und eine zweite Extraktionsgefäß-Baugruppe (444), wobei jede Extraktionsgefäß-Baugruppe ein erstes Ventil (431, 432), eine Einlassöffnung (462, 464), eine Auslassöffnung (463, 467), und ein zweites Ventil (433, 434) umfasst, wobei das erste Ventil mit dem Strömungsteiler verbunden ist, die Einlassöffnung mit dem ersten Ventil und mit einem Einlass (441, 445) eines Extraktionsgefäßes verbunden ist, und die Auslassöffnung mit einem Auslass (443, 447) des Extraktionsgefäßes verbunden ist und mit dem zweiten Ventil verbunden ist;
(d) einen Koppler 424), in Flüssigkeitsverbindung mit dem zweiten Ventil von jeweils der ersten Extraktionsgefäß-Baugruppe und dem zweiten Ventil der zweiten Extraktionsbaugruppe, wobei der Koppler Flüssigkeitsströmung von den zwei oder mehr vorgeschalteten Flüssigkeitswegen empfängt und eine kombinierte Strömung zu einer Einzelströmung liefert, die dem Koppler nachgeschaltet ist; und
(e) einen Zuführungsinjektor (450) in Flüssigkeitsverbindung mit dem Koppler, wobei der Zuführungsinjektor fähig ist, eine Zuführung von Extraktionslösungsmittel bereitzustellen, das mit Probe zur Verwendung im System geliefert wurde.

2. Probenextraktionssystem (400) nach Anspruch 1, das ferner drei oder mehr Extraktionsgefäß-Baugruppen umfasst.

3. Probenextraktionssystem (400) nach Anspruch 1, wobei jede der ersten Extraktionsgefäß-Baugruppe (442) und der zweiten Extraktionsgefäß-Baugruppe (444) zusätzlich mit einer Verbindung zu einem Detektor versehen sind, wobei sich der Verbindungspunkt innerhalb jeder Extraktionsgefäß-Baugruppe nachgeschaltet der Auslassöffnung und vorgeschaltet des Kopplers (424) befindet.

4. Probenextraktionssystem (400) nach Anspruch 1, das zusätzlich mit einem Karussell und einem Schaltarm versehen ist, wobei das Karussell einen oder mehr Extraktionsgefäßhalter umfasst, und der Schaltarm fähig ist, Extraktionsgefäße in irgendeine der Folgenden zu platzieren und Extraktionsgefäße daraus zu entfernen: der ersten Extraktionsgefäß-Baugruppe, der zweiten Extraktionsgefäß-Baugruppe und einem oder mehr der Extraktionsgefäßhalter des Karussells.

5. Probenextraktionssystem (400) nach Anspruch 1, wobei der Strömungsteiler (422) fähig ist, variable Durchflussmengen von Extraktionslösungsmittel proportional an jede der ersten Extraktionsgefäß-Baugruppe (442) und der zweiten Extraktionsgefäß-Baugruppe (444) bereitzustellen.

6. Probenextraktionssystem (400) nach Anspruch 1, wobei das System mit einer Probenschleife versehen ist, um Probeninjektion auf eine chromatografische Säule und wobei der Zuführungsinjektor des Probenextraktionssystems in Flüssigkeitsverbindung mit der Probenschleife steht.

7. Probenextraktionssystem (400) nach Anspruch 1, wobei die erste Extraktionsgefäß-Baugruppe (442) und die zweite Extraktionsgefäß-Baugruppe (444) jeweils zusätzlich eine unabhängig steuerbare Wärmequelle umfassen.

8. Probenextraktionssystem (400) nach Anspruch 1, wobei jede der ersten Extraktionsgefäß-Baugruppe (442) und der zweiten Extraktionsgefäß-Baugruppe (444) unabhängige Drucksteuerung einschließen.

9. Probenextraktionssystem (800, 900), das fähig ist, anhaltende Lieferung einer Zuführungslösung bereitzustellen, die eine ungefähr konstante Probenkonzentration aufweist, wobei das Probenextraktionssystem umfasst,
(a) eine Quelle (810, 910) für Extraktionslösungsmittel
(b) ein erstes Mehrwegeventil (834, 934), das mit der Quelle (810, 910) für Extraktionslösungsmittel verbunden ist;
(c) eine erste Extraktionsgefäß-Baugruppe (844, 944) und eine zweite Extraktionsgefäß-Baugruppe (842, 942), wobei jede Extraktionsgefäß-Baugruppe (844, 944, 842, 844) eine Einlassöffnung (962, 964) und eine Auslassöffnung (963, 965) umfasst, wobei die Einlassöffnung (962) der ersten Extraktionsgefäß-Baugruppe (844, 944) mit dem ersten Mehrwegeventil (834, 934) verbunden ist und die Auslassöffnung (965) der zweiten Extraktionsgefäß-Baugruppe (842, 942) mit dem ersten Mehrwegeventil (834, 934) verbunden ist; und
(d) ein zweites Mehrwegeventil (832, 932) in Flüssigkeitsverbindung mit den ersten und zweiten Extraktionsgefäß-Baugruppen (844, 944, 842, 844), wobei die Auslassöffnung (963) der ersten Extraktionsgefäß-Baugruppe (844, 944) mit dem zweiten Mehrwegeventil (832, 932) verbunden ist und der Einlass (964) der zweiten Extraktionsgefäß-Baugruppe (842, 942) mit dem zweiten Mehrwegeventil (832, 932) verbunden ist;
wobei das erste Mehrwegeventil (834, 934) und das zweite Mehrwegeventil (832, 942) ausgelegt sind, mehrfache Flüssigkeitskreise ab der Quelle (810, 910) für Extraktionslösungsmittel durch jede Extraktionsgefäß-Baugruppe (844, 944, 842, 844) individuell oder durch beide Extraktionsgefäß-Baugruppen (844, 944, 842, 844) in Reihenfolge zu einer Auslassöffnung des Systems (800, 900) herzustellen.

10. Probenextraktionssystem (800, 900) nach Anspruch 9, wobei die Auslassöffnung des Systems in flüssiger Verbindung mit einem Chromatografiesystem steht.

11. Probenextraktionssystem (800, 900) nach Anspruch 9, das mit drei oder mehr Extraktionsgefäß-Baugruppen versehen ist.

12. Probenextraktionssystem (800, 900) nach Anspruch 9, das zusätzlich mit einem Karussell und einem Schaltarm versehen ist, wobei das Karussell eine Vielzahl von Extraktionsgefäßhaltern umfasst, und der Schaltarm fähig ist, Extraktionsgefäße in irgendeine der Folgenden zu platzieren und Extraktionsgefäße daraus zu entfernen: der ersten Extraktionsgefäß-Baugruppe (844, 944), der zweiten Extraktionsgefäß-Baugruppe (842, 942) und einem oder mehr der Extraktionsgefäßhalter des Karussells.

13. Probenextraktionssystem (800, 900) nach Anspruch 9, wobei jede der ersten Extraktionsgefäß-Baugruppe (844, 944) und der zweiten Extraktionsgefäß-Baugruppe (842, 942) zusätzlich mit einer Verbindung zu einem Detektor verbunden sind, wobei sich der Verbindungspunkt nachgeschaltet der Auslassöffnung befindet, vorzugsweise wobei das Chromatografiesystem mit einer Probenschleife versehen ist, um Probeninjektion auf eine Chromatografiesäule bereitzustellen und, wobei der Zuführungsinjektor des Probenextraktionssystems in Flüssigkeitsverbindung mit der Probenschleife steht.

14. Probenextraktionssystem (800, 900) nach Anspruch 9, wobei die erste Extraktionsgefäß-Baugruppe (844, 944) und die zweite Extraktionsgefäß-Baugruppe (842, 942) jeweils zusätzlich eine unabhängig steuerbare Wärmequelle umfassen.

15. Probenextraktionssystem (800, 900) nach Anspruch 9, wobei jedes Mehrwegeventil mit einer Quelle für Extraktionslösungsmittel und mit einem Auslass des Systems verbunden ist.

## Revendications

1. Un système d'extraction d'échantillon (400) pouvant fournir une administration prolongée d'une solution d'alimentation à un système, le système d'extraction d'échantillon comprenant :
(a) une source de solvant d'extraction (410), dans lequel le solvant d'extraction comprend un fluide sélectionné dans un groupe constitué de (i) un solvant organique maintenu à ou au-dessus de 86,2 bar (1250 psi) et (ii) CO₂ ;
(b) un séparateur (422) en communication fluidique avec la source de solvant d'extraction, le séparateur permettant de fournir deux ou plus de deux trajets de fluide en aval du séparateur ;
(c) un premier ensemble cuve d'extraction (442) et un deuxième ensemble cuve d'extraction (444), chaque ensemble cuve d'extraction comprenant une première vanne (431, 432), un orifice d'entrée (462, 464), un orifice de sortie (463, 467) et une deuxième vanne (433, 434), la première vanne étant raccordée au séparateur, l'orifice d'entrée étant raccordé à la première vanne et à une entrée (441, 445) d'une cuve d'extraction, et l'orifice de sortie étant raccordé à une sortie (443, 447) de la cuve d'extraction et étant raccordé à la deuxième vanne ;
(d) un coupleur (424), en communication fluidique avec la deuxième vanne du premier ensemble cuve d'extraction et la deuxième vanne du deuxième ensemble cuve d'extraction, le coupleur permettant de recevoir un écoulement de fluide de deux ou de plus de deux trajets de fluide en amont et administrant un écoulement combiné à un flux unique en aval du coupleur ; et
(e) un injecteur d'alimentation (450) en communication fluidique avec le coupleur, l'injecteur d'alimentation pouvant fournir une alimentation de solvant d'extraction fournie avec l'échantillon à utiliser dans le système.

2. Le système d'extraction d'échantillon (400) selon la revendication 1, comprenant en outre trois ou plus de trois ensembles cuves d'extraction.

3. Le système d'extraction d'échantillon (400) selon la revendication 1, dans lequel le premier ensemble cuve d'extraction (442) et le deuxième ensemble cuve d'extraction (444) sont en plus chacun munis d'un raccordement à un détecteur, le point de raccordement dans chaque ensemble cuve d'extraction étant en aval de l'orifice de sortie et en amont du coupleur (424).

4. Le système d'extraction d'échantillon (400) selon la revendication 1, muni en plus d'un carrousel et d'un bras de commutation, dans lequel le carrousel comprend un ou plusieurs supports de cuves d'extraction, et le bras de commutation peut placer des cuves d'extraction dans, et retirer des cuves d'extraction de : soit le premier ensemble cuve d'extraction, soit le deuxième ensemble cuve d'extraction, et soit un, soit plusieurs des supports de cuves d'extraction du carrousel.

5. Le système d'extraction d'échantillon (400) selon la revendication 1, dans lequel le séparateur (422) peut fournir des débits proportionnellement variables de solvant d'extraction à chacun du premier ensemble cuve d'extraction (442) et du deuxième ensemble cuve d'extraction (444).

6. Le système d'extraction d'échantillon (400) selon la revendication 1, dans lequel le système est muni d'une boucle d'échantillon pour fournir une injection d'échantillon sur une colonne de chromatographie et dans lequel l'injecteur d'alimentation du système d'extraction d'échantillon est en communication fluidique avec la boucle d'échantillon.

7. Le système d'extraction d'échantillon (400) selon la revendication 1, dans lequel le premier ensemble cuve d'extraction (442) et le deuxième ensemble cuve d'extraction (444) comprennent chacun en plus une source de chaleur réglable indépendamment.

8. Le système d'extraction d'échantillon (400) selon la revendication 1, dans lequel le premier ensemble cuve d'extraction (442) et le deuxième ensemble cuve d'extraction (444) incluent chacun une régulation de pression indépendante.

9. Un système d'extraction d'échantillon (800, 900) pouvant fournir une administration prolongée d'une solution d'alimentation ayant une concentration d'échantillon approximativement constante, le système d'extraction d'échantillon comprenant :
(a) une source de solvant d'extraction (810, 910) ;
(b) une première vanne à plusieurs voies (834, 934) raccordée à la source de solvant d'extraction (810, 910) ;
(c) un premier ensemble cuve d'extraction (844, 944) et un deuxième ensemble cuve d'extraction (842, 942), chaque ensemble cuve d'extraction (844, 944, 842, 844) comprenant un orifice d'entrée (962, 964) et un orifice de sortie (963, 965), dans lequel l'orifice d'entrée (962) du premier ensemble cuve d'extraction (844, 944) est raccordé à la première vanne à plusieurs voies (834, 934) et l'orifice de sortie (965) du deuxième ensemble cuve d'extraction (842, 942) est raccordé à la première vanne à plusieurs voies (834, 934) ; et
(d) une deuxième vanne à plusieurs voies (832, 932) en communication fluidique avec les premier et deuxième ensembles cuves d'extraction (844, 944, 842, 844), dans lequel l'orifice de sortie (963) du premier ensemble cuve d'extraction (844, 944) est raccordé à la deuxième vanne à plusieurs voies (832, 932) et l'entrée (964) du deuxième ensemble cuve d'extraction (842, 942) est raccordée à la deuxième vanne à plusieurs voies (832, 932) ;
dans lequel la première vanne à plusieurs voies (834, 934) et la deuxième vanne à plusieurs voies (832, 942) sont configurées pour établir plusieurs circuits de fluide provenant de la source de solvant d'extraction (810, 910) à travers chaque ensemble cuve d'extraction (844, 944, 842, 844) individuellement ou à travers les deux ensembles cuves d'extraction (844, 944, 842, 844) en séquence, vers un orifice de sortie du système (800, 900).

10. Le système d'extraction d'échantillon (800, 900) selon la revendication 9, dans lequel l'orifice de sortie du système est raccordé de manière fluidique à un système de chromatographie.

11. Le système d'extraction d'échantillon (800, 900) selon la revendication 9, muni de trois ou plus de trois ensembles cuves d'extraction.

12. Le système d'extraction d'échantillon (800, 900) selon la revendication 9, muni en plus d'un carrousel et d'un bras de commutation, dans lequel le carrousel comprend une pluralité de supports de cuves d'extraction, et le bras de commutation peut placer des cuves d'extraction dans, et retirer des cuves d'extraction de : soit le premier ensemble cuve d'extraction (844, 944), soit le deuxième ensemble cuve d'extraction (842, 942) et soit un, soit plusieurs des supports de cuves d'extraction du carrousel.

13. Le système d'extraction d'échantillon (800, 900) selon la revendication 9, dans lequel le premier ensemble cuve d'extraction (844, 944) et le deuxième ensemble cuve d'extraction (842, 942) sont en plus chacun munis d'un raccordement à un détecteur, le point de raccordement étant en aval de l'orifice de sortie, de préférence dans lequel le système de chromatographie est muni d'une boucle d'échantillon pour fournir une injection d'échantillon sur une colonne de chromatographie et dans lequel l'injecteur d'alimentation du système d'extraction d'échantillon est en communication fluidique avec la boucle d'échantillon.

14. Le système d'extraction d'échantillon (800, 900) selon la revendication 9, dans lequel le premier ensemble cuve d'extraction (844, 944) et le deuxième ensemble cuve d'extraction (842, 942) comprennent en plus chacun une source de chaleur réglable indépendamment.

15. Un système d'extraction d'échantillon (800, 900) selon la revendication 9, dans lequel chaque vanne à plusieurs voies est raccordée à la source de solvant d'extraction et à une sortie du système.
